# EUROPEAN PATENT SPECIFICATION

(11) **EP 3 261 339 B1**
(45) Date of publication and mention of the grant of the patent: **05.01.2022**
(21) Application number: 16752225.9
(22) Date of filing: 27.01.2016
(51) Int. Cl.: G11B 20/10, G11B 27/32, G11B 27/10, H04N 21/2362, H04N 21/434, H04N 5/765, H04N 21/2343, H04N 7/01, H04N 9/804, H04N 9/82, H04N 21/84, H04N 5/85, H04L 29/06

(54) **INFORMATION PROCESSING DEVICE, INFORMATION RECORDING MEDIUM AND INFORMATION PROCESSING METHOD, AND PROGRAM**
INFORMATIONSVERARBEITUNGSVORRICHTUNG, INFORMATIONSVERARBEITUNGSMEDIUM, INFORMATIONSVERARBEITUNGSVERFAHREN UND PROGRAMM
DISPOSITIF DE TRAITEMENT D'INFORMATIONS, SUPPORT D'ENREGISTREMENT D'INFORMATIONS ET PROCÉDÉ DE TRAITEMENT D'INFORMATIONS, ET PROGRAMME

(30) Priority: 16.02.2015 JP 2015027930
(43) Date of publication of application: 27.12.2017
(73) Proprietor: Sony Group Corporation, Tokyo 108-0075 (JP)
(72) Inventor: HAMADA, Toshiya, Minato-Ku Tokyo 108-0075 (JP); TAKAHASHI, Ryohei, Minato-Ku Tokyo 108-0075 (JP)
(74) Representative: Witte, Weller & Partner Patentanwälte mbB
(86) International application number: PCT/JP2016/052334
(87) International publication number: WO 2016/132836

(56) References cited:
- EP-A1- 3 070 934
- EP-A1- 3 217 672
- WO-A1-2014/057832
- WO-A1-2014/178286
- WO-A1-2014/178286
- WO-A1-2015/007910
- WO-A1-2015/008683
- CA-A1- 2 914 992
- JP-A- 2014 528 182
- US-A1- 2012 314 773

## Description

### Technical Field

The present disclosure relates to an information processing device, an information recording medium, an information processing method, and a program, and more particularly, to an information processing device, an information recording medium, an information processing method, and a program applicable to processes of recording and using attribute information related to video.

### Background Art

EP 3 217 672 A1, which is an Art. 54(3) EPC document, relates to a transmission device that transmits transmission video data obtained by applying high dynamic range opto-electronic conversion to high dynamic range video data.

EP 3 070 934 A1, which is an Art. 54(3) EPC document, relates to a broadcast signal transmission method and apparatus for providing HDR broadcast service.

WO 2014/178286 A1 relates to a transmission device. WO 2015/007910 A1 relates to an HDR metadata transport and WO 2015/008683 A1 relates to a file generation device.

Digital Versatile Discs (DVDs) and Blu-ray (registered trademark) Discs (BDs) are widely used as information recording media for recording a variety of content, such as movies and music.

On a BD-ROM, a medium on which content such as a movie is prerecorded, data such as audio and subtitles are recorded in conjunction with a high-definition (HD) video, for example.

Current BD-ROMs primarily store HD video, also referred to as HDTV-compatible 2K video, but video quality is expected to improve in the future, and media storing ultra-high-definition (UHD) 4K video are expected to increase.

Note that processes of recording and playing back data using BDs as well as 4K video are described in literature such as Patent Literature 1 (JP 2011-023071A), for example.

The standardization of the data recording format for recording ultra-high-definition (UHD) video onto BDs is currently being advanced by the Blu-ray (registered trademark) Disc Association (BDA), a standards developing organization.

The BDA is currently settling upon standards that take into account not only support for 4K video, but also support for high dynamic range (HDR) video, in which the color space and contrast ratio of the video to output to a display are expanded.

Compared to the standard dynamic range (SDR) video widely being used in current 2K-capable displays, HDR video features a wider expressible color space and also allow for a larger contrast ratio to be configured, enabling video representation that is close to the reality seen with the naked eye.

However, at present, most displays in general usage, such as televisions, are only capable of outputting SDR video, and few are capable of outputting HDR video.

In the future, displays capable of outputting not only 4K video but also HDR video are expected to gradually become more popular.

Information recording media such as BDs storing HDR video content are expected to be sold prior to the popularization of such displays.

Consequently, it is also necessary to take into account the playback of media storing HDR video content by non-HDR-capable displays.

For example, in the case of outputting HDR video content recorded on a disc to a non-HDR-capable display capable of outputting only SDR video, it is necessary for the disc playback device to perform some kind of support process, such as performing a process of converting the HDR video into SDR video for output, or displaying a message indicating that the content stored on-disc is HDR video, and correct output is unavailable on a non-HDR-capable display.

In order to perform such support, the playback device, before playing back content from an information recording medium such as a BD storing HDR video content, needs to ascertain data attributes (video attributes) indicating properties such as whether the data stored on the information recording medium is HDR video or SDR video, and execute a process corresponding to the ascertained data type.

It is necessary for the device that executes data playback to check such video attributes before data playback, but at present, the recording format of such video attributes is not clearly prescribed.

In addition, on BDs, data for playback and database files such as playback control information and management information are recorded in accordance with a BD-supported data format, such as the BDMV format, for example, but even in the case of converting this BD recorded data into data of a different format, such as MP4 format, for example, and recording the converted data onto media such as flash memory, it is still necessary to check the video attributes and record the checked attribute information in an attribute information storage area of the MP4 format data.

Furthermore, even in the case in which a user terminal receives and plays back transmitted data from a data server or a broadcasting station, for example, it is necessary to check whether the received data is HDR video or SDR video and execute playback according to the attributes of the received data, and a fast process for checking data attributes (video attributes) is demanded.

### Citation List

### Patent Literature

Patent Literature 1: JP 2011-023071A

### Disclosure of Invention

### Technical Problem

In light of the above problems, an object of the present disclosure is to provide an information processing device, information recording medium, information processing method, and program making it possible to check the attributes of video data included in data recorded on a medium or in input data, and perform a process according to the checked attributes.

### Solution to Problem

Embodiments of the present disclosure are defined in the appended claims.

Note that a program according to the present disclosure is, for example, a program provided in computer-readable format to an information processing device or a computer system capable of executing various program code, the program being providable by a storage medium or communication medium. By providing such a program in a computer-readable format, processing corresponding to the program is realized on the information processing device or the computer system.

Further objectives, features, and advantages of the present disclosure will be clarified by a more detailed description based on the embodiments of the present disclosure described hereinafter and the attached drawings. Note that in this specification, the term "system" refers to a logical aggregate configuration of multiple devices, and the respective devices of the configuration are not limited to being inside the same housing.

### Advantageous Effects of Invention

According to a configuration of an embodiment of the present disclosure, there is realized a configuration that acquires video attribute information from a transport stream (TS) file, and executes a process according to the acquired attributes.

Specifically, a data processing unit acquires video attribute information stored in a TS file storing data to be processed, and executes format conversion or an output process applying the acquired video attribute information. The video attribute information is video attribute information in video stream units stored in a transport stream (TS) file, and at least includes video attribute information enabling the identification of whether each video stream is high dynamic range (HDR) video or standard dynamic range (SDR) video. The data processing unit executes control depending on whether the video stream to be subjected to the format conversion or the output process is HDR video or SDR video.

According to this configuration, there is realized a configuration that acquires video attribute information from a transport stream (TS) file, and executes a process according to the acquired attributes.

Note that the advantageous effects described in this specification are merely for the sake of example and non-limiting, and there may be additional advantageous effects.

### Brief Description of Drawings

[FIG. 1] FIG. 1 is a diagram explaining an example structure of BDMV format data;
[FIG. 2] FIG. 2 is a diagram explaining an example playback process for BDMV format data;
[FIG. 3] FIG. 3 is a diagram explaining MPEG-2 TS format data;
[FIG. 4] FIG. 4 is a diagram explaining MP4 format data;
[FIG. 5] FIG. 5 is a diagram explaining MP4 format data;
[FIG. 6] FIG. 6 is a diagram explaining an example conversion process from MPEG-2 TS format to MP4 format;
[FIG. 7] FIG. 7 is a diagram explaining the input of MPEG-2 TS format data, and an example playback process;
[FIG. 8] FIG. 8 is a diagram explaining an example of stored data in a TS packet;
[FIG. 9] FIG. 9 is a diagram explaining an example data structure of Program Map Table (PMT) data;
[FIG. 10] FIG. 10 is a diagram explaining an example of video attribute information record structure inside a Program Map Table (PMT);
[FIG. 11] FIG. 11 is a diagram illustrating an example of video attribute information;
[FIG. 12] FIG. 12 is a diagram illustrating an example of video attribute information;
[FIG. 13] FIG. 13 is a diagram illustrating an example of video attribute information;
[FIG. 14] FIG. 14 is a diagram illustrating an example of video attribute information;
[FIG. 15] FIG. 15 is a diagram illustrating an example of video attribute information;
[FIG. 16] FIG. 16 is a diagram illustrating an example of video attribute information;
[FIG. 17] FIG. 17 is a diagram explaining an example of recording video attribute information in an video attribute information recording area inside a Program Map Table (PMT);
[FIG. 18] FIG. 18 is a diagram explaining an example of recording video attribute information in an video attribute information recording area inside a Program Map Table (PMT);
[FIG. 19] FIG. 19 is a diagram explaining an example of recording video attribute information in an video attribute information recording area inside a Program Map Table (PMT);
[FIG. 20] FIG. 20 is a diagram illustrating a flowchart explaining a format conversion processing sequence executed by an information processing device;
[FIG. 21] FIG. 21 is a diagram illustrating a flowchart explaining a data playback processing sequence executed by an information processing device;
[FIG. 22] FIG. 22 is a diagram illustrating a flowchart explaining a transport stream file generation processing sequence executed by an information processing device;
[FIG. 23] FIG. 23 is a diagram illustrating a flowchart explaining a transport stream file generation processing sequence executed by an information processing device;
[FIG. 24] FIG. 24 is a diagram explaining an example configuration of an information processing device to which is applied a process according to the present disclosure;
[FIG. 25] FIG. 25 is a diagram explaining an example configuration of an information processing device to which is applied a process according to the present disclosure; and
[FIG. 26] FIG. 26 is a diagram explaining an example configuration of an information processing device to which is applied a process according to the present disclosure.

### Mode(s) for Carrying Out the Invention

Hereinafter, an information processing device, information recording medium information processing method, and program according to the present disclosure will be described in detail and with reference to the drawings. Hereinafter, the description will proceed according to the following items.
1. MPEG-2 TS format
2. MP4 format
3. Example configuration enabling acquisition of video data attribute information from MPEG-2 TS format data
   3-1. Video elementary stream type information (video_stream_type)
   3-2. Video elementary stream dynamic range identification flag (video_d_range)
   3-3. Video elementary stream transfer characteristics (gamma characteristics) information (transfer_characteristics)
   3-4. Video elementary stream color information (colour_primaries)
   3-5. Video elementary stream attribute information [(2)+(3)+(4)] (video_d_range2)
   3-6. Video elementary stream YCbCr information (luma_chroma_signal_format)
4. Specific examples of video attribute information records
   4-1. Attribute information record example 1: example of recording attribute information (1) (3) (4) (6)
   4-2. Attribute information record example 2: example of recording attribute information (2) (3) (4) (6)
   4-3. Attribute information record example 3: example of recording attribute information (5) (6)
5. Example data processing sequences executed by information processing device
   5-1. Conversion processing sequence from MPEG-2 TS format to MP4 format
   5-2. Playback processing sequence for MPEG-2 TS format data
   5-3. MPEG-2 TS file generation processing sequence (configuring video stream type)
   5-4. MPEG-2 TS file generation processing sequence (configuring attributes other than video stream type)
6. Example configuration of information processing device
   6-1. Example configuration of information processing device executing format conversion and data recording process
   6-2. Example configuration of information processing device executing data playback or data generation and recording process
7. Summary of configuration according to embodiment of present disclosure

### [1. MPEG-2 TS format]

The present disclosure provides a configuration making it possible to reliably confirm whether data recorded on an information recording medium, such as a Blu-ray (registered trademark) Disc (BD), for example, or received data from a server or a broadcasting station, for example, is high dynamic range (HDR) video or standard dynamic range (SDR) video.

First, the Blu-ray (registered trademark) Disc Movie (BDMV) format, which is the data recording format of BDs, and the MPEG-2 TS format will be described.

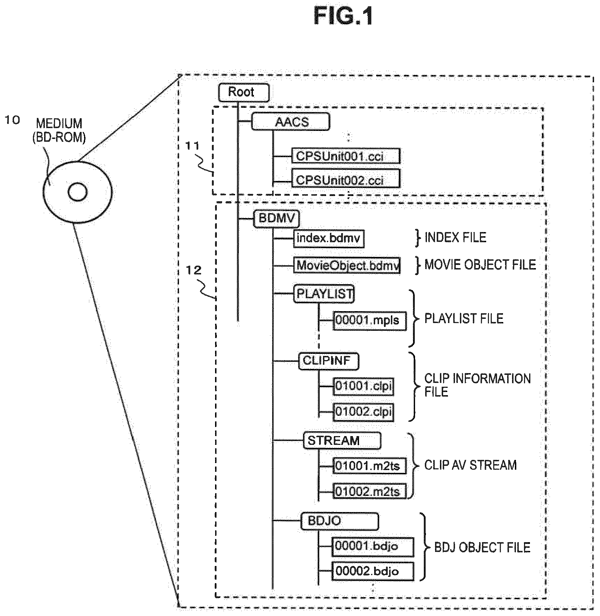

FIG. 1 is a diagram illustrating a directory of recorded data conforming to the BDMV format, recorded onto an information recording medium 10, which is a ROM-type Blu-ray (registered trademark) Disc (BD), for example.

The directory is separated into a management information configuration section 11 (AACS directory) and a data section 12 (BDMV directory), as illustrated in FIG. 1.

In the management information configuration section 11 (AACS directory), information such as a CPS unit key file, which is the encryption key of the data, and a usage control information file are stored.

Meanwhile, in the BDMV directory and below in the data section 12, files such as
an index file,
PlayList files,
Clip Information files,
Clip AV Stream files, and
BDJO files
are recorded, for example.

In the index file, title information which is treated as index information to apply to the playback process is stored.

A PlayList file is a file prescribing parameters such as a playback order of content according to the program information of a playback program designated by the title, and includes designation information with respect to Clip Information that includes playback position information.

A Clip Information file is a file designated by a PlayList file, and includes information such as playback position information for a Clip AV Stream file.

A Clip AV Stream file is a file storing AV stream data to be played back.

A BDJO file is a file storing execution control information for files storing Java (registered trademark) programs, commands, and the like.

The sequence by which an information processing device plays back content recorded on an information recording medium is as follows.
(a) First, a specific title is designated from the index file by the playback application.
(b) The playback program associated with the designated title is selected.
(c) A PlayList prescribing the content playback order and the like is selected according to the program information of the selected playback program.
(d) An AV stream or command is read out as actual content data by the Clip Information prescribed by the selected PlayList, and a process of playing back the AV stream or executing the command is conducted.

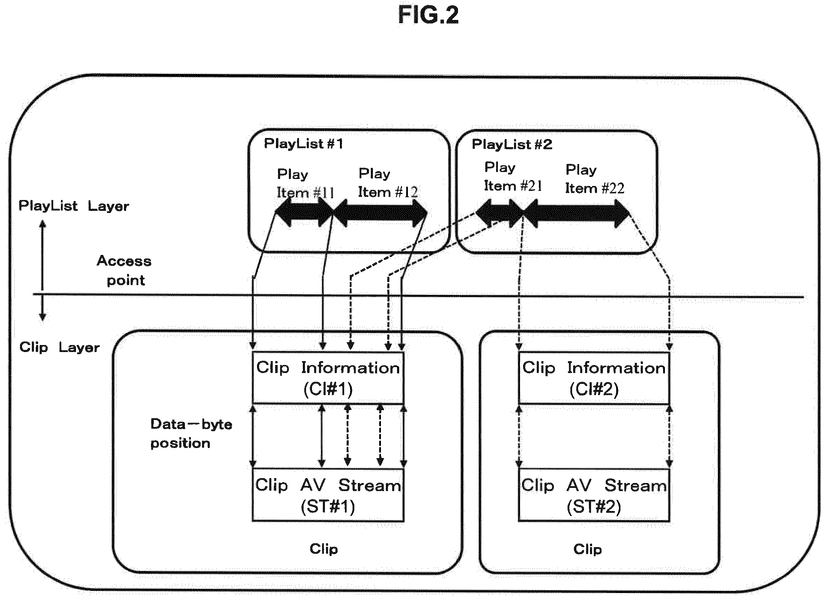

FIG. 2 is a diagram explaining the correspondence relationships among data recorded onto a first medium 110, namely,
PlayList files,
Clip Information files, and
Clip AV Stream files.

The AV streams made up of certain video and audio data which are the actual data to be played back are recorded as Clip AV Stream files. Furthermore, PlayList files and Clip Information files are prescribed as management information and playback control information files for these AV streams.

As illustrated in FIG. 2, these multiple categories of files may be categorized into the following two layers of
a PlayList Layer that includes PlayList files, and
a Clip Layer made up of Clip AV Stream files and Clip Information files.

Note that one Clip Information file is associated with one Clip AV Stream file. A pair of these files is considered to be an Object, and in some cases, these are collectively called a Clip.

Management information, such as an EP map recording detailed information about the data included in a Clip AV Stream file, such as information about I picture positions in MPEG data, for example, is recorded in the Clip Information file.

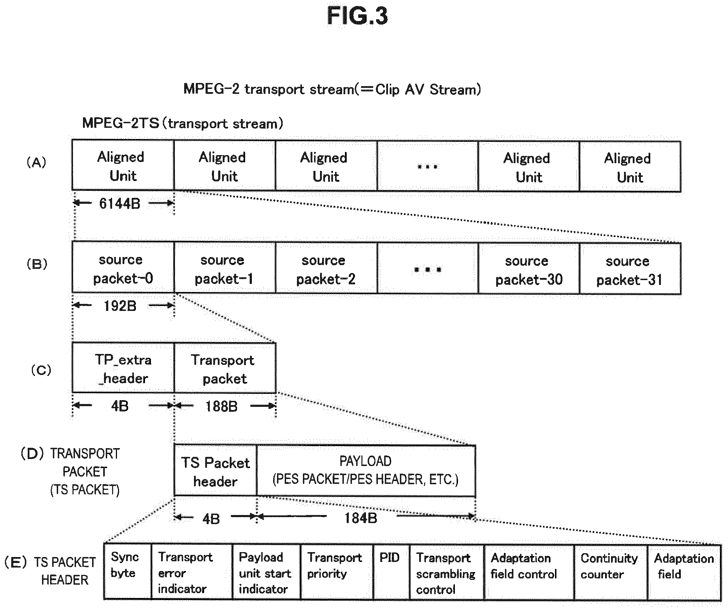

The Clip AV Stream file stores data mapping an MPEG-2 transport stream (TS) according to the prescribed structure of the BDMV format. The details of this configuration will be explained later with reference to FIG. 3.

In addition, the Clip Information file stores management information for acquiring information such as the playback start position of stored data in a Clip AV Stream file, such as correspondence data between data positions of byte sequence data in a Clip AV Stream file and playback time positions such as entry points (EPs), which are playback start points when the data is unpacked along the time axis, for example.

For example, when given a time stamp indicating an elapsed playback time position from the start point of the content, it becomes possible to reference the Clip Information file to acquire the data readout position of the Clip AV Stream file, or in other words, an address to use as the playback start point.

A PlayList file includes playback segment designation information with respect to data available for playback included in the Clip Layer (that is, Clip Information files and Clip AV Stream files).

In a PlayList file, one or more PlayItems are configured, and each PlayItem includes playback segment designation information with respect to data available for playback included in the Clip Layer (that is, Clip Information files and Clip AV Stream files).

A Clip AV Stream file storing the actual video and audio data to be played back has an MPEG-2 transport stream (TS) file structure, as illustrated in FIG. 3, for example.

The MPEG-2 TS format prescribes a data storage format (container format) for encoded data and the like when encoded data constituting content, such as video, audio, and subtitles, is stored on a recording medium, or transmitted by broadcast wave or over a network.

The MPEG-2 TS format is standardized in ISO 13818-1, and is used for data recording onto Blu-ray (registered trademark) Discs (BDs), digital broadcasting, and the like, for example.

Note that the MP4 format is primarily used as a data recording format for flash memory. The MP4 format is prescribed in ISO/IECC 14496-14, and is a format suited to the case of recording data to flash memory and the like widely used in devices such as smartphones, for example.

Recently, most mobile devices in use include playback applications capable of playing back MP4 data recorded according to the MP4 format, and in the case of recording content to a medium in a mobile device, recording in MP4 format is demanded in many cases.

An overview of the MP4 format will be given later.

The Blu-ray (registered trademark) Disc Movie (BDMV) format, which is the data recording format for BDs described earlier, is a dedicated format for BDs that treats encoded data, such as video and audio stored according to the MPEG-2 TS format, as its structural elements.

Note that the allowable encoded data of video, audio, and still images which may be stored according to the MPEG-2 TS format includes the following encoded data, for example.
Video: MPEG-1, MPEG-2, AVC (MPEG-4 AVC), HEVC (MPEG-4 HEVC)
Audio: MP1, MP2, MP3, linear PCM, DTS
Still images: JPEG
For example, each of the above types of encoded data is stored by being broken up into transport stream (TS) packets prescribed in MPEG-2 TS.

The MPEG-2 TS format used on BDs and in broadcasting will now be described with reference to FIG. 3 and subsequent drawings.

As illustrated in FIG. 3, the MPEG-2 TS format has the following characteristics.

As illustrated in FIG. 3(A), an MPEG-2 TS file is made up of an integer number of aligned units.

The size of an aligned unit is 6 kB (=6144 bytes (2048 × 3 bytes)).

An aligned unit starts from the first byte of a source packet.

As illustrated in FIG. 3(B), a source packet is 192 bytes long.

As illustrated in FIG. 3(C), one source packet is made up of a TP_extra_header and a TS packet. The TP_extra_header is 4 bytes long, while the TS packet is 188 bytes long.

As illustrated in FIG. 3(D), a TS packet includes a header (TP header) and a payload section. Stored in the payload of one TS packet is the encoded data of any one type of data, such as audio, or control information such as attribute information.

As illustrated in FIG. 3(E), in the header (TP header) of a TS packet, a program ID (PID) indicating the data type of the payload is recorded.

Stored in the payload of a TS packet is a packet (packetized elementary stream (PES)) storing an elementary stream (ES), which is encoded data such as video and audio, a PES header storing playback time information and the like, attribute information and control information corresponding to the content, and the like.

Specifically, the attribute information and control information stored in the payload of a TS packet is information called program-specific information (PSI/SI), for example.

PSI/SI includes a Program Map Table (PMT), for example.

The Program Map Table (PMT) includes a map of correspondence information between the PIDs of TS packets and data types. An information processing device executing a process on TS packets first references the PMT, confirms the PIDs corresponding to the data of each of video, audio, subtitles, and other control information (attribute information), and on the basis of the confirmed PIDs corresponding to the data types, separates the received packets by data type, and performs processing in accordance with each data type.

Note that as illustrated in FIG. 3(E), the following data is stored in the header information of a TS packet.
(a) Synchronization byte (Sync byte)
(b) Transport error indicator (Transport_error_indicator)
(c) Payload unit start indicator (Payload_unit_start_indicator)
(d) Transport priority (Transport_priority)
(e) Program ID (PID)
(f) Transport scrambling control
(g) Adaptation field control
(h) Continuity counter
(i) Adaptation field

### [2. MP4 format]

Next, the MP4 format which is suited to the case of recording data to flash memory and the like widely used in devices such as smartphones, for example, will be described.

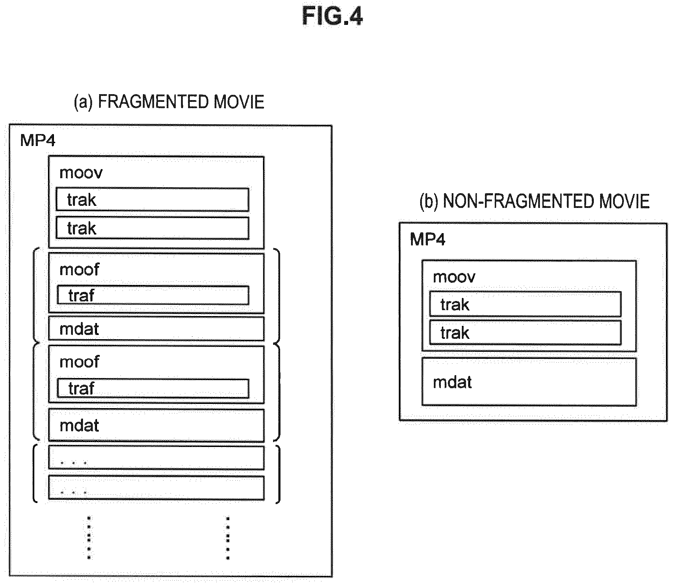

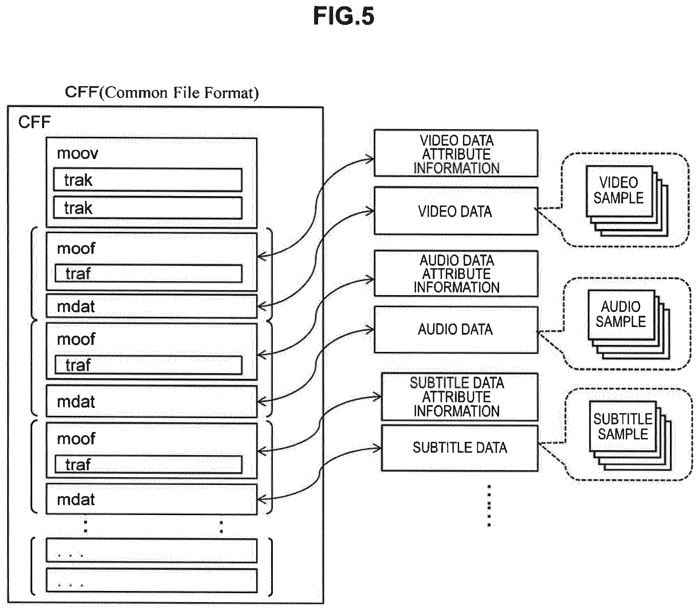

FIGS. 4 and 5 illustrate an overview of the MP4 format.

FIG. 4 illustrates the following two examples as examples of the MP4 format prescribed in ISO/IEC 14496-14.
(a) Fragmented MP4 file (fragmented movie)
(b) Non-fragmented MP4 file (non-fragmented movie)

The MP4 files illustrated in FIGS. 4(a) and 4(b) are files configured as one processing unit in data recording or a playback process according to the MP4 format.
(a) A fragmented MP4 file (fragmented movie) is a file format in which the data to be played back, such as video and audio, is stored by being fragmented into individual pieces of playback data of a designated time or less.
(b) A non-fragmented MP4 file (non-fragmented movie) is a file format in which the data to be played back, such as video and audio, is stored without being fragmented.

In an MP4 file, areas are configured in units of boxes, and each box stores data defined in units of boxes.

Each box includes box-size, box-type, and box-data areas.

In the box-size, the data length (byte size) of the box is recorded.

In the box-type, the type of data stored in the box is recorded.

In the box-data, data of the type indicated by the box-type is recorded.

In the fragmented MP4 file illustrated in FIG. 4(a), the following types of boxes are configured:
a moov box;
trak boxes;
moof boxes;
traf boxes; and
mdat boxes.

The actual data, that is, the data to be played back such as video, audio, and subtitles, is stored divided into mdat boxes.

In addition, a moof box is associated with each mdat box. A moof box stores metadata such as attribute information and playback control information related to the fragmented actual data stored in the mdat box associated with that moofbox.

The fragmented MP4 file illustrated in FIG. 4(a) has a configuration that stores a large number of sets of data, with one set of data being the actual data (mdat) which is fragmented data of the data to be played back, and the metadata (moof) corresponding to the fragmented actual data, and in addition, stores metadata related to all of the multiple stored sets of data in a moov box.

Inside the metadata (moof) corresponding to fragmented actual data, a traf box is configured.

The traf box stores information such as playback sequence information about the associated actual data (mdat).

The moov box is configured as a storage area for metadata such as playback control information about the data stored in the MP4 file as a whole.

Inside the moov box, one or more trak boxes are configured. A trak box is configurable per data type, such as video, audio, and subtitles, for example, and stores information such as playback sequence information for the respective data.

Note that when the playback data stored in the MP4 file includes multiple different types of video data, such as HD video and 4K video, for example, separate trak boxes may be configured according to these video types.

In addition, when the audio data stored in the MP4 file includes multiple different types of audio data, such as Japanese audio and English audio, for example, separate trak boxes may be configured according to these audio types.

Similarly, when the subtitle data stored in the MP4 file includes multiple different types of subtitle data, such as Japanese subtitles and English subtitles, for example, separate trak boxes may be configured according to these subtitle types.

(b) A non-fragmented MP4 file (non-fragmented movie) is a file format in which the data to be played back, such as video and audio, is stored without being fragmented.

In the non-fragmented MP4 file illustrated in FIG. 4(b), the following types of boxes are configured:
a moov box;
trak boxes; and
an mdat box.

The mdat box stores the actual data to be played back.

The moov box stores metadata configured in correspondence with the actual data (mdat) to be played back, such as metadata including the attributes of the actual data (mdat) to be played back and playback control information, for example.

The trak boxes configured inside the moov box store information such as playback sequence information about the actual data (mdat).

Similarly to the fragmented MP4 file in FIG. 4(a) above, one or more trak boxes are likewise configured inside the moov box configured in the non-fragmented MP4 file of FIG. 4(b). Each trak box is configured per data type, such as video, audio, and subtitles, for example.

FIG. 4 illustrates an example basic configuration of the MP4 format.

The Digital Entertainment Content Ecosystem (DECE), the standards organization related to the MP4 format, has standardized the Common File Format (CFF) as a new file format based on MP4. The CFF will now be described with reference to FIG. 5.

The Common File Format (CFF) illustrated in FIG. 5 basically has a data structure similar to the fragmented movie MP4 described with reference to FIG. 4(a).

In other words, in the Common File Format (CFF) illustrated in FIG. 5, similarly to the fragmented MP4 file of FIG. 4(a) described earlier, the following boxes are configured:
a moov box;
trak boxes;
moof boxes;
traf boxes; and
mdat boxes.

The data stored in each box is nearly the same as the fragmented MP4 file of FIG. 4(a).

However, in the CFF, a restriction is imposed by which each mdat box stores only one type of data.

In other words, each mdat box stores one type of data from among:
(a) video;
(b) audio; and
(c) subtitles.

This restriction prevents mixed storage of the above data (a) to (c).

Note that when the CFF file includes multiple different types of video data, such as HD video and 4K video, for example, these different types of video are stored in different mdat boxes.

Similarly, different types of audio data, such as Japanese audio and English audio, for example, are stored in separate mdat boxes, and subtitles such as Japanese subtitles and English subtitles are likewise stored in different mdat boxes.

In the typical fragmented MP4 file illustrated in FIG. 4(a), mixed storage of different types of data such as video, audio, and subtitles in an mdat box configured as a storage box for one data fragment is allowed.

However, in the Common File Format (CFF) illustrated in FIG. 5, a restriction is imposed by which only one type of data may be stored in one mdat box.

In other words, only one type of data from among video, audio, and subtitles is stored separately in each mdat box.

Consequently, the moof boxes, which are metadata storage areas corresponding to the mdat boxes, are also configured to store metadata configured in correspondence with one type of data from among video, audio, and subtitles.

Note that the data stored in an mdat box which is the data section of the MP4 format is categorized into samples as a basic data unit.

In the Common File Format (CFF), one mdat box stores a set of data samples of the same type, being only video samples, only audio samples, or only subtitle samples.

Furthermore, the CFF prescribed by the DECE also prescribes the coding modes (codecs) and data formats for video, audio, and subtitles allowed to be stored in a CFF file.

Data formats allowed to be stored in a CFF file include the following data formats, for example.
Video: AVC (MPEG-4 AVC), HEVC (MPEG-4 AVC)
Audio: MPEG-4 AAC, Dolby, AC-3
Subtitles: SMPTE Timed Text (SMPTE-TT)

### [3. Example configuration enabling acquisition of video data attribute information from MPEG-2 TS format data]

As described earlier, the present disclosure provides a configuration making it possible to reliably confirm whether data recorded on an information recording medium, such as a Blu-ray (registered trademark) Disc (BD), for example, or received data from a server or a broadcasting station, for example, is high dynamic range (HDR) video or standard dynamic range (SDR) video.

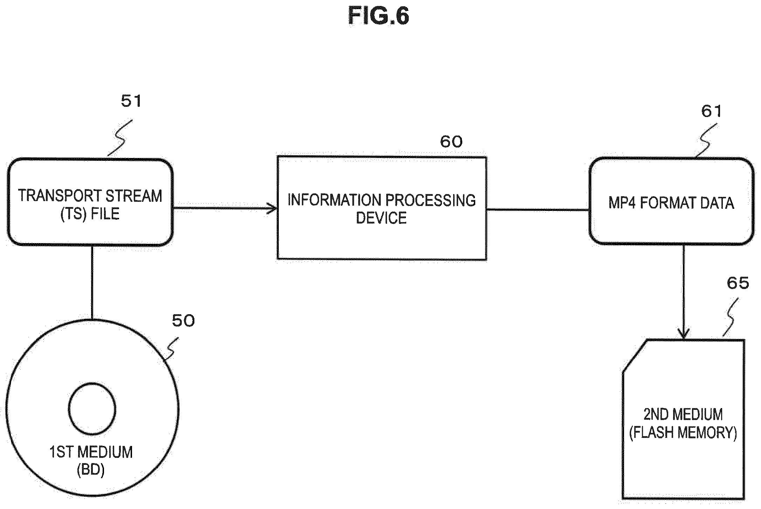

An example configuration of reading MPEG-2 TS format data from a Blu-ray (registered trademark) Disc (BD), converting to MP4 format data, and executing data recording (copying) to a second medium such as flash memory will be described with reference to FIG. 6.

The information processing device 60 illustrated in FIG. 6 reads MPEG-2 TS format data from a first medium (BD) 50, converts the read MPEG-2 TS format data to MP4 format data, and records to a second medium (flash memory) 65.

During the data conversion process, the information processing device 60 reads out from the first medium (BD) 50 an MPEG-2 TS file storing data to be played back, such as video, audio, and subtitles. In other words, the information processing device 60 reads out a transport stream (TS) generated in accordance with the MPEG-2 TS format described with reference to FIG. 3.

Additionally, the information processing device 60 executes format conversion based on the read-out transport stream (TS) file 51, generates an MP4 format data file 61, and records to the second medium (flash memory) 65.

In the format conversion process, it is necessary for the information processing device 60 to check whether the video data stored in the transport stream (TS) file 51 is HDR video or SDR video, for example, and record metadata (attribute information) indicating HDR video or SDR video in a metadata storage area inside the MP4 format data.

In other words, in the format conversion process, the information processing device 60 needs to perform a process of checking, from the transport stream (TS) file 51, whether the video data stored in the transport stream (TS) file 51 is HDR video or SDR video.

As one specific example process, checking is possible by analyzing the video data stored in the TS file. However, the video data stored in the TS file is encoded data, and thus checking whether the video data is HDR video or SDR video requires decoding the encoded video data using a designated codec. The decoding process requires a codec and processing time corresponding to the coding mode, and becomes an obstacle to efficient processing. Also, decoding produces plaintext data, and thus increases the possibility of data leakage and poses a problem from the perspective of content protection.

In order to solve such problems, there is demanded a configuration enabling the video attributes of video data stored in a TS file, such as whether the video data is HDR video or SDR video, to be checked by a process other than analysis that involves a process of decoding the video data. The present disclosure realizes such a configuration.

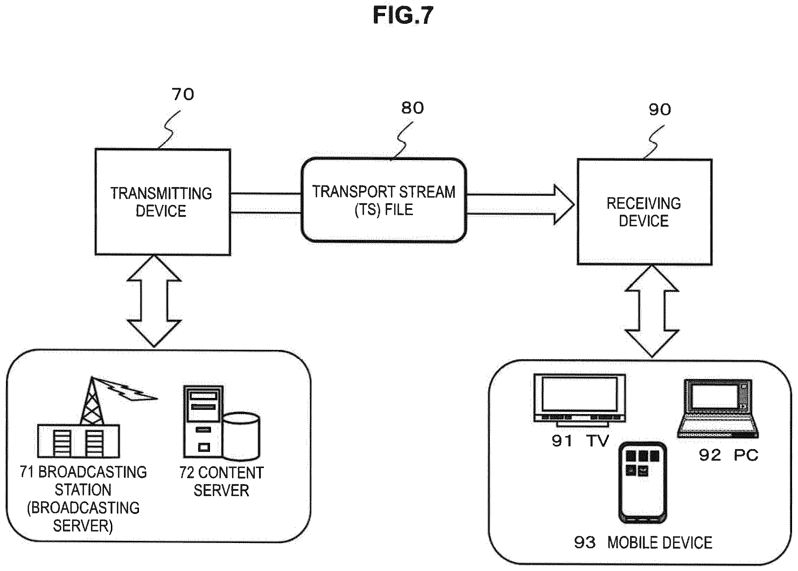

Note that the example described with reference to FIG. 6 is an example process for the case of converting MPEG-2 TS format data read from a BD to MP4 format data and recording to a second medium, but similar problems exist with other configurations, such as a configuration that externally receives an MPEG-2 TS file as illustrated in FIG. 7, for example.

FIG. 7 illustrates a configuration of transmitting data from a transmitting device 70 made up of a content server 72 or the like to a receiving device 90 made up of a user device such as a TV 91, a PC 92, or a mobile device 93, and playing back the data.

The transmitted data is a transport stream (TS) file 80 generated in accordance with the MPEG-2 TS format.

Likewise in such a configuration, the receiving device 90 needs to perform a process of checking whether the video data stored in the transport stream (TS) file 80 transmitted from the transmitting device 70 is HDR video or SDR video.

For example, if the display used on the receiving device 90 side is SDR-only and does not support HDR, and the video data stored in the transport stream (TS) file 80 transmitted from the transmitting device 70 is HDR video, it is necessary to perform a process of converting the video data to SDR video.

In this way, in order to efficiently configure various settings in preparation for a video data playback or output process, it is necessary to instantly check from the received data whether the video data stored in the transport stream (TS) file 80 is HDR video or SDR video.

As described earlier, the encoded video data stored in the TS file is encoded data, and thus checking whether the video data is HDR video or SDR video requires decoding the encoded video data using a designated codec. The decoding process requires a codec and processing time corresponding to the coding mode, and becomes an obstacle to efficient processing. Also, decoding produces plaintext data, and thus increases the possibility of data leakage and poses a problem from the perspective of content protection.

In order to solve such problems, there is demanded a configuration enabling the video attributes of video data stored in a TS file, such as whether the video data is HDR video or SDR video, to be checked by a process other than analysis of the video data itself. Hereinafter, an embodiment that realizes such a configuration will be described.

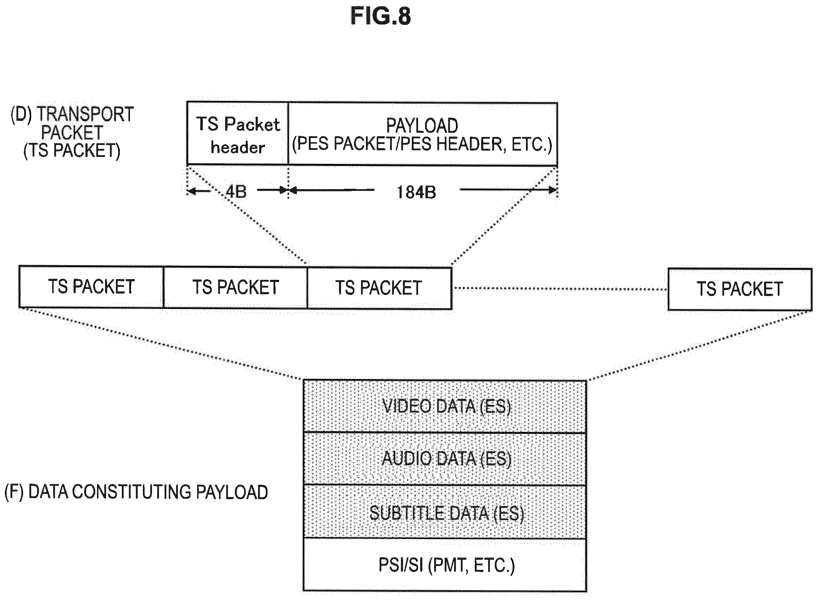

FIG. 8 will be referenced to describe an example of data stored in a transport packet (TS packet), which is a structural element of a transport stream file.

The transport packet (TS packet) in FIG. 8(D) corresponds to the transport packet (TS packet) illustrated in FIG. 3(D).

A TS packet includes a header (TP header) and a payload. Stored in the payload of one TS packet is the encoded data of any one type of data, such as audio, or control information such as attribute information.

As illustrated in FIG. 3(E), in the header (TP header) of a TS packet, a program ID (PID) indicating the data type of the payload is recorded.

Stored in the payload of a TS packet is a packet (packetized elementary stream (PES)) storing an elementary stream (ES), which is encoded data such as video and audio, a PES header storing playback time information and the like, attribute information and control information corresponding to the content, and the like.

As described earlier, specifically, the attribute information and control information stored in the payload of a TS packet is information called program-specific information (PSI/SI), for example.

PSI/SI includes a Program Map Table (PMT), for example.

The Program Map Table (PMT) includes a map of correspondence information between the PIDs of TS packets and data types. An information processing device executing a process on TS packets first references the PMT, confirms the PIDs corresponding to the data of each of video, audio, subtitles, and other control information (attribute information), and on the basis of the confirmed PIDs corresponding to the data types, separates the received packets by data type, and performs processing in accordance with each data type.

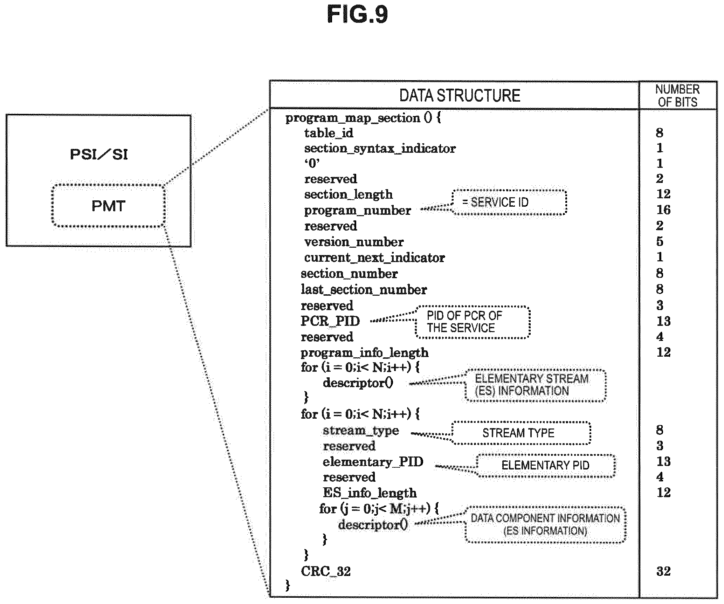

FIG. 9 illustrates an example data structure of the Program Map Table (PMT) stored in a TS packet.

The major data recorded in the Program Map Table (PMT) is as follows.
(1) Service identifier (program_number)
(2) PCR_PID
(3) Elementary stream (ES) information
   (3a) Stream type
   (3b) Elementary PID
   (3c) Elementary correspondence information (descriptor)

(1) The service identifier (program_number) is information identifying the content in service units, such as the program name, for example.
(2) The PCR_PID is a program clock reference PID, and is PID information of a packet storing a time stamp corresponding to the service (content).
(3) The elementary stream (ES) information is a field that records detailed information about the elementary streams (ES) storing each of the video, audio, and captions corresponding to the service (content).

Each of the video, audio, and caption information is successively recorded.

In this field, the following information is stated.
(3a) Stream type
(3b) Elementary PID
(3c) Data component (ES) information (ES information)

(3a) The stream type is information indicating whether the elementary stream (ES) information is video, audio, or subtitles.
(3b) The elementary PID indicates the PID of the TS packet storing data of the type prescribed by the stream type.
(3c) In the data component information (ES information), there is recorded additional information about the data of the type prescribed by the stream type (ES: video, audio, subtitles), or in other words, additional information such as control information and attribute information in units of each elementary stream (ES) identified by the elementary PID (elementary_PID).

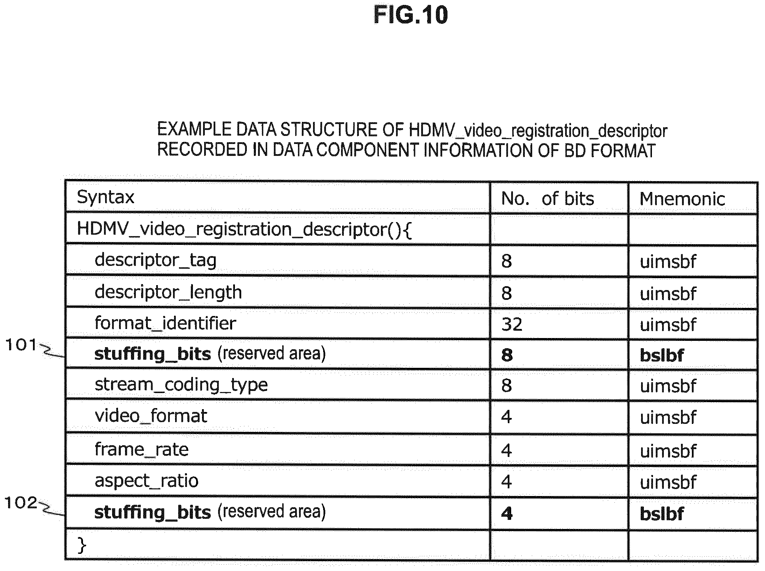

FIG. 10 illustrates an example data structure of the [HDMV_video_registration_descriptor], which is an example of attribute information in video elementary stream units recorded in the (3c) data component information (ES information).

The example illustrated in FIG. 10 is an example record structure of attribute information for HDMV video, and is an example record structure of various attribute information related to individual video elementary streams. In the example illustrated in FIG. 10, the following information is recorded.
Coding type (stream_coding_type)
Video format (video_format)
Frame rate (frame_rate)
Aspect ratio (aspect_ratio)

The 4-bit reserved areas (stuffing_bits) 101 and 102 provided in two places are unused areas in the current format.

In a configuration according to the present disclosure, new additional attribute information about video is recorded in these reserved areas.

The attribute information to be added is also attribute information in units of an elementary stream identified by the elementary PID (elementary_PID).

Hereinafter, an example of video attribute information to be newly added and recorded in a reserved area (stuffing_bits) will be described.

Hereinafter, an example record of the following six pieces of video attribute information will be described as an example of additional record candidates for video attribute information.
(1) Video elementary stream type information (video_stream_type)
(2) Video elementary stream dynamic range identification flag (video_d_range)
(3) Video elementary stream transfer characteristics (gamma characteristics) information (transfer_characteristics)
(4) Video elementary stream color information (colour_primaries)
(5) Video elementary stream attribute information [(2)+(3)+(4)] (video_d_range2)
(6) Video elementary stream YCbCr information (luma_chroma_signal_format)

### [3-1. Video elementary stream type information (video_stream_type)]

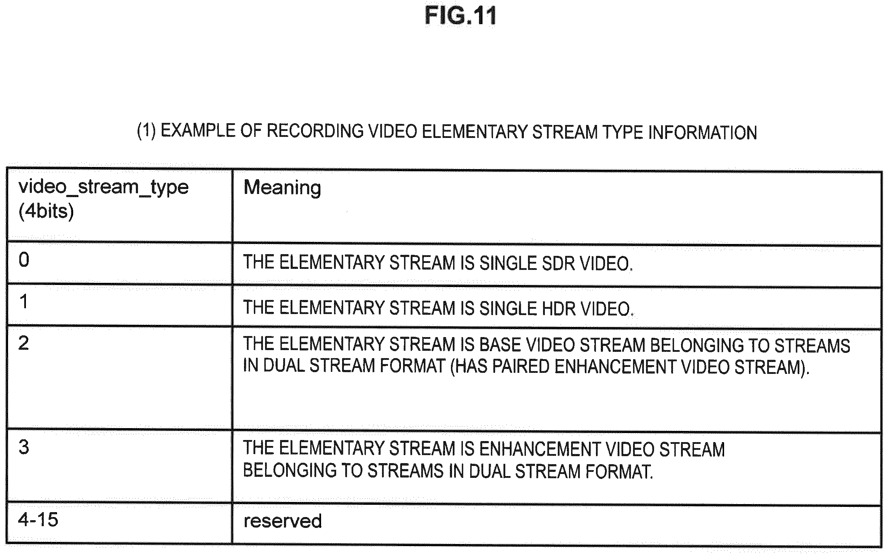

First, FIG. 11 will be referenced to describe an example record of (1) video elementary stream type information (video_stream_type).

FIG. 11 illustrates an example of recording the video elementary stream type information (video_stream_type) as 4-bit data.

In this example, video elementary stream type information (video_stream_type) is recorded using 4 bits in part of a reserved area (stuffing_bits) set in the attribution information record area [HDMV_video_registration_descriptor] about a video elementary stream recorded in the data component information (ES information) described with reference to FIG. 10.

There are 16 possible bit values expressible using 4 bits, from 0 (0000) to 15 (1111). This 4-bit data is used to indicate which of the following attributes is held by the video elementary stream identified by the PID.

The definition of each bit value is configured as follows.
0 (=0000): The elementary stream is single SDR video.
1 (=0001): The elementary stream is single HDR video.
2 (=0010): The elementary stream is a base video stream belonging to streams in dual stream format.
3 (=0011): The elementary stream is an enhancement video stream belonging to streams in dual stream format.
4 to 15 (=0100 to 1111): Reserved

An information processing device, such as a playback device that executes content playback, is able to determine which of the above four attributes is held by the elementary stream identified by the elementary PID (elementary_PID), on the basis of the above configured bit value.

A bit value equal to 0 indicates that the elementary stream identified by the elementary PID (elementary_PID) is single SDR video, or in other words, made up of one SDR video stream.

A bit value equal to 1 indicates that the elementary stream identified by the elementary PID (elementary_PID) is single HDR video, or in other words, made up of one HDR video stream.

A bit value equal to 2 indicates that the elementary stream identified by the elementary PID (elementary_PID) is a base video stream belonging to streams in dual stream format.

Note that in the case of HDR video, a configuration utilizing the two streams of a base video stream and an enhancement video stream is possible. In other words, the following two types of video playback processes are possible.
(a) HDR video playback process utilizing only the base video stream
(b) HDR video playback process utilizing the two streams of the base video stream and the enhancement video stream

In the enhancement video stream, additional information for performing video conversion with respect to the base video stream is stored. By utilizing the additional information stored in the enhancement video stream, video output that is more suitable to the display device than output video utilizing only the base video stream is expressed.

For example, an HDR video playback process utilizing the two video streams of the base video stream and the enhancement video stream realizes video playback of higher quality than a HDR video playback process utilizing only the base video stream.

Alternatively, enhancement information stored in the enhancement video stream is utilized to convert HDR video generated when utilizing only the base video stream into SDR video, and SDR video playback on an older, non-HDR-capable display is realized.

A bit value equal to 3 indicates that the elementary stream identified by the elementary PID (elementary_PID) is an enhancement video stream belonging to streams in dual stream format.

### [3-2. Video elementary stream dynamic range identification flag (video_d_range)]

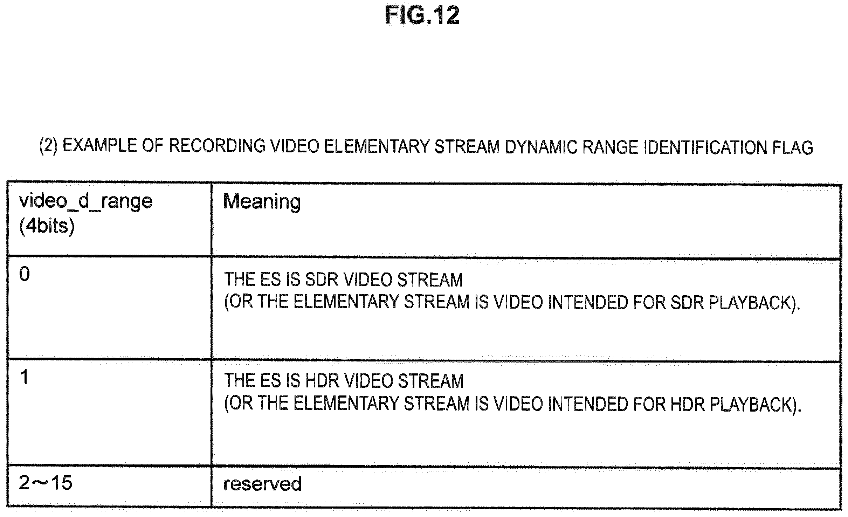

Next, FIG. 12 will be referenced to describe an example record of (2) video elementary stream dynamic range identification flag (video_d_range).

FIG. 12 illustrates an example of recording the video elementary stream dynamic range identification flag (video_d_range) as 4-bit data.

In this example, the video elementary stream dynamic range identification flag (video_d_range) is recorded using 4 bits in part of a reserved area (stuffing_bits) set in the attribution information record area [HDMV_video_registration_descriptor] about a video elementary stream recorded in the data component information (ES information) described with reference to FIG. 10.

There are 16 possible bit values expressible using 4 bits, from 0 (0000) to 15 (1111). This 4-bit data is used to indicate which of the following attributes is held by the video elementary stream identified by the PID.

The definition of each bit value is configured as follows.
0 (=0000): The elementary stream is SDR video (or video intended for SDR playback).
1 (=0001): The elementary stream is HDR video (or video intended for HDR playback).
2 to 15 (=0010 to 1111): Reserved

An information processing device, such as a playback device that executes content playback, is able to determine which of the above two attributes is held by the elementary stream identified by the elementary PID (elementary_PID) on the basis of the above configured bit value.

A bit value equal to 0 indicates that the elementary stream identified by the elementary PID (elementary_PID) is SDR video, or video intended for SDR playback.

A bit value equal to 1 indicates that the elementary stream identified by the elementary PID (elementary_PID) is single HDR video, or video intended for HDR playback.

### [3-3. Video elementary stream transfer characteristics (gamma characteristics) information (transfer_characteristics)]

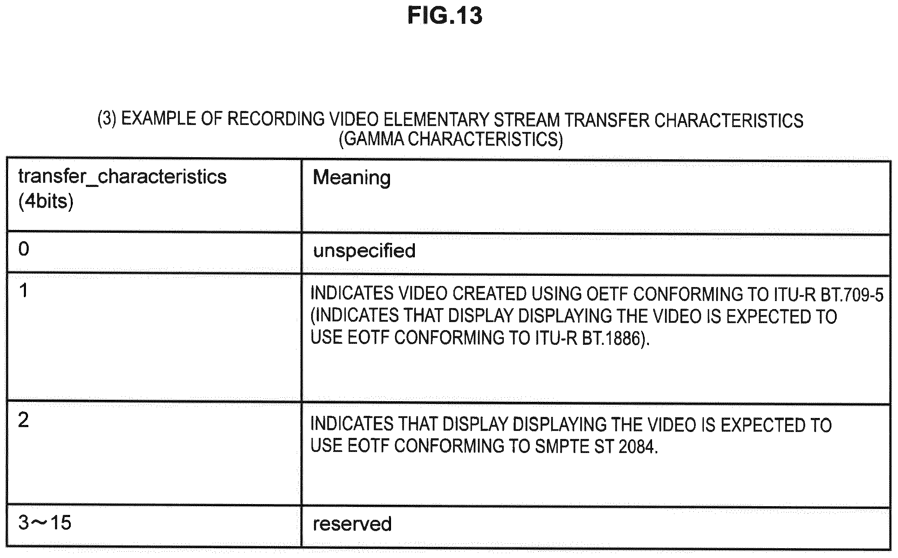

Next, FIG. 13 will be referenced to describe an example record of (3) video elementary stream transfer characteristics (gamma characteristics) information (transfer_characteristics).

Fig. 13 illustrates an example of recording the video elementary stream transfer characteristics (gamma characteristics) information (transfer_characteristics) as 4-bit data.

In this example, video elementary stream transfer characteristics (gamma characteristics) information (transfer_characteristics) is recorded using 4 bits in part of a reserved area (stuffing_bits) set in the attribution information record area [HDMV_video_registration_descriptor] about a video elementary stream recorded in the data component information (ES information) described with reference to FIG. 10.

There are 16 possible bit values expressible using 4 bits, from 0 (0000) to 15 (1111). This 4-bit data is used to indicate which of the following attributes is held by the video elementary stream identified by the PID.

The definition of each bit value is configured as follows.
0 (=0000): Unspecified
1 (=0001): Indicates that the elementary stream is video that was created using the optical-electro transfer function (OETF) conforming to ITU-R BT.709-5 (assumes that the display displaying the video of the elementary stream executes a display process applying the electro-optical transfer function (EOTF) conforming to ITU-R BT.1886).
2 (=0010): Assumes that the display displaying the video of the elementary stream executes a display process applying the electro-optical transfer function (EOTF) conforming to SMPTE ST 2084.)
3 to 15 (=0011 to 1111): Reserved

An information processing device, such as a playback device that executes content playback, is able to determine which of the above attributes is held by the elementary stream identified by the elementary PID (elementary_PID) on the basis of the above configured bit value.

A bit value equal to 0 means that the transfer characteristics (gamma characteristics) of the elementary stream identified by the elementary PID (elementary_PID) are unspecified. An information processing device such as a playback device thus performs an optimal gamma conversion process according to the display device.

A bit value equal to 1 indicates that the elementary stream identified by the elementary PID (elementary_PID) is video that was created using the optical-electro transfer function (OETF) conforming to ITU-R BT.709-5. Note that this assumes that the display displaying the video of the elementary stream executes a display process applying the electro-optical transfer function (EOTF) conforming to ITU-R BT.1886.

Note that this corresponds to the transfer characteristics (gamma characteristics) for SDR video, and an information processing device such as a playback device thus generates an output signal for the display device by executing a process (gamma conversion) according to the transfer characteristics (gamma characteristics) for SDR video.

A bit value equal to 2 indicates that the display displaying the video of the elementary stream identified by the elementary PID (elementary_PID) executes a display process applying the electro-optical transfer function (EOTF) conforming to SMPTE ST 2084.

Note that this corresponds to the transfer characteristics (gamma characteristics) for HDR video, and an information processing device such as a playback device thus generates an output signal for the display device by executing a process (gamma conversion) according to the transfer characteristics (gamma characteristics) for HDR video.

### [3-4. Video elementary stream color information (colour_primaries)]

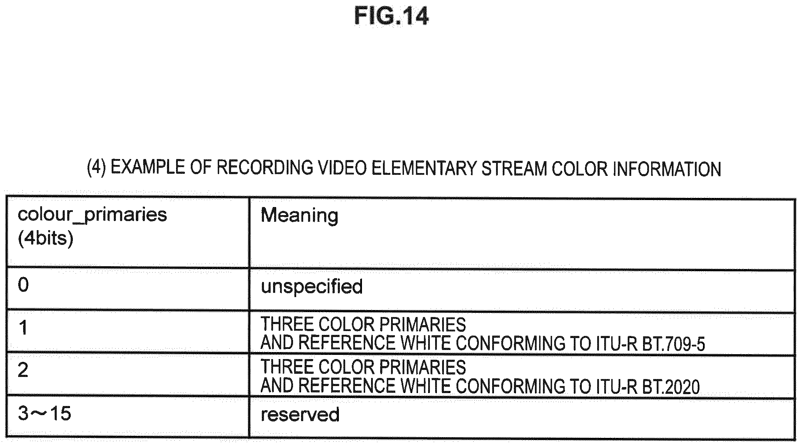

Next, FIG. 14 will be referenced to describe an example record of (4) video elementary stream color information (colour_primaries).

FIG. 14 illustrates an example of recording the video elementary stream color information (colour_primaries) as 4-bit data.

In this example, video elementary stream color information (colour_primaries) is recorded using 4 bits in part of a reserved area (stuffing_bits) set in the attribution information record area [HDMV_video_registration_descriptor] about a video elementary stream recorded in the data component information (ES information) described with reference to FIG. 10.

There are 16 possible bit values expressible using 4 bits, from 0 (0000) to 15 (1111). This 4-bit data is used to indicate which of the following attributes is held by the video elementary stream identified by the PID.

The definition of each bit value is configured as follows.
0 (=0000): Unspecified
1 (=0001): Indicates that the elementary stream has the three color primaries and reference color conforming to ITU-R BT.709-5.
2 (=0010): Indicates that the elementary stream has the three color primaries and reference color conforming to ITU-R BT.2020.
3 to 15 (=0011 to 1111): Reserved

An information processing device, such as a playback device that executes content playback, is able to determine which of the above attributes is held by the elementary stream identified by the elementary PID (elementary_PID) on the basis of the above configured bit value.

A bit value equal to 0 means that the color information of the elementary stream identified by the elementary PID (elementary_PID) is unspecified. An information processing device such as a playback device thus performs corresponding processing for optimal color configuration according to the display device.

A bit value equal to 1 indicates that the elementary stream identified by the elementary PID (elementary_PID) has the three color primaries and reference color conforming to ITU-R BT.709-5.

Note that is the color configuration for SDR video, and an information processing device such as a playback device thus generates an output signal for the display device by executing a video output process for SDR video.

A bit value equal to 2 indicates that the elementary stream identified by the elementary PID (elementary_PID) has the three color primaries and reference color conforming to ITU-R BT.2020.

Note that is the color configuration for HDR video, and an information processing device such as a playback device thus generates an output signal for the display device by executing a video output process for HDR video.

### [3-5. Video elementary stream attribute information [(2)+(3)+(4)] (video_d_range2)]

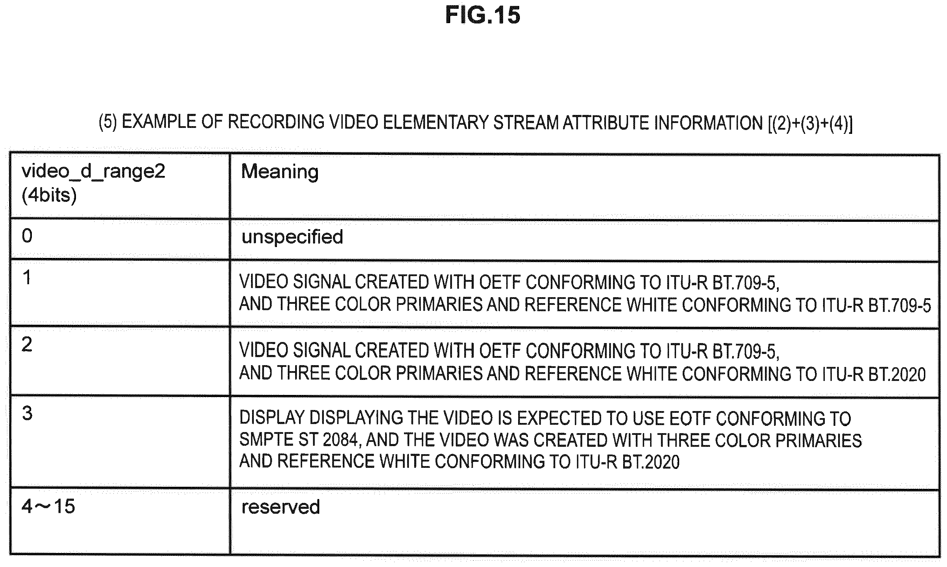

Next, FIG. 15 will be referenced to describe an example record of (5) video elementary stream attribute information [(2)+(3)+(4)] (video_d_range2).

FIG. 15 illustrates an example of recording the video elementary stream attribute information [(2)+(3)+(4)] (video_d_range2) as 4-bit data.

The video elementary stream attribute information [(2)+(3)+(4)] refers to the attribute information described earlier, or in other words, the following video attribute information:
(2) Video elementary stream dynamic range identification flag (video_d_range)
(3) Video elementary stream transfer characteristics (gamma characteristics) information (transfer_characteristics)
(4) Video elementary stream color information (colour_primaries)

The video elementary stream attribute information [(2)+(3)+(4)] (video_d_range2) is recorded using 4 bits in part of a reserved area (stuffing_bits) set in the attribution information record area [HDMV_video_registration_descriptor] about a video elementary stream recorded in the data component information (ES information) described with reference to FIG. 10.

There are 16 possible bit values expressible using 4 bits, from 0 (0000) to 15 (1111). This 4-bit data is used to indicate which of the following attributes is held by the video elementary stream identified by the PID.

The definition of each bit value is configured as follows.
0 (=0000): Unspecified
1 (=0001): Indicates that the elementary stream is video data applying the OETF conforming to ITU-R BT.709-5 and the three color primaries and reference color conforming to ITU-R BT.709-5.
2 (=0010): Indicates that the elementary stream is video data applying the OETF conforming to ITU-R BT.709-5 and the three color primaries and reference color conforming to ITU-R BT.2020.
3 (=0011): Indicates that the elementary stream is video data which presupposes a display of the type applying the EOTF conforming to SMPTE ST 2048, and which was generated on the basis of the three color primaries and reference color conforming to ITU-R BT.2020.
4 to 15 (=0100 to 1111): Reserved

An information processing device, such as a playback device that executes content playback, is able to determine which of the above attributes is held by the elementary stream identified by the elementary PID (elementary_PID) on the basis of the above configured bit value.

A bit value equal to 0 means that information such as the OETF applied to video generation of the elementary stream identified by the elementary PID (elementary_PID), the EOTF of the display, and the gamut of the video signal is unspecified. An information processing device such as a playback device thus performs corresponding processing for optimal color configuration according to the display device.

A bit value equal to 1 indicates that the elementary stream identified by the elementary PID (elementary_PID) is video data applying the OETF conforming to ITU-R BT.709-5 and the three color primaries and reference color conforming to ITU-R BT.709-5.

These are the characteristics corresponding to SDR video data, and an information processing device such as a playback device thus generates an output signal for the display device by executing a video output process for SDR video.

A bit value equal to 2 indicates that the elementary stream identified by the elementary PID (elementary_PID) is video data applying the OETF conforming to ITU-R BT.709-5 and the three color primaries and reference color conforming to ITU-R BT.2020.

These are the characteristics corresponding to specific SDR video data having a wide gamut, and an information processing device such as a playback device thus generates an output signal for the display device by executing a video output process for specific SDR video having a wide gamut.

A bit value equal to 3 indicates that the elementary stream identified by the elementary PID (elementary_PID) is video data which presupposes a display of the type applying the EOTF conforming to SMPTE ST 2048, and which was generated on the basis of the three color primaries and reference color conforming to ITU-R BT.2020.

These are the characteristics corresponding to HDR video data, and an information processing device such as a playback device thus generates an output signal for the display device by executing a video output process for HDR video.

### [3-6. Video elementary stream YCbCr information (luma_chroma_signal_format)]

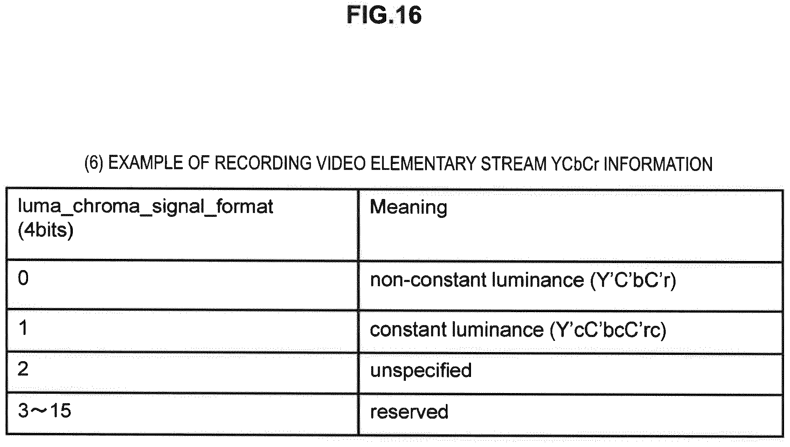

Next, FIG. 16 will be referenced to describe an example record of (6) video elementary stream YCbCr information (luma_chroma_signal_format).

FIG. 16 illustrates an example of recording the video elementary stream YCbCr information (luma_chroma_signal_format) as 4-bit data.

In this example, video elementary stream YCbCr information (luma_chroma_signal_format) is recorded using 4 bits in part of a reserved area (stuffing_bits) set in the attribution information record area [HDMV_video_registration_descriptor] about a video elementary stream recorded in the data component information (ES information) described with reference to FIG. 10.

There are 16 possible bit values expressible using 4 bits, from 0 (0000) to 15 (1111). This 4-bit data is used to indicate which of the following attributes is held by the video elementary stream identified by the PID.

The definition of each bit value is configured as follows.
0 (=0000): Indicates that the elementary stream includes a YCbCr signal of the non-constant luminance type (Y'C'bC'r).
1 (=0001): Indicates that the elementary stream includes a YCbCr signal of the constant luminance type (Y'cC'bcC'rc).
2 (=0010): Unspecified
3 to 15 (=0011 to 1111): Reserved

An information processing device, such as a playback device that executes content playback, is able to determine which of the above attributes is held by the elementary stream identified by the elementary PID (elementary_PID) on the basis of the above configured bit value.

A bit value equal to 0 indicates that the elementary stream identified by the elementary PID (elementary_PID) includes a YCbCr signal of the non-constant luminance type (Y'C'bC'r).

There are two types of YCbCr signals.

One is the YCbCr signal of the non-constant luminance type (Y'C'bC'r), and the other is the YCbCr signal of the constant luminance type (Y'cC'bcC'rc).

A YCbCr signal of the non-constant luminance type has a configuration that allows for luminance changes depending on the output color, and is often used in SDR video. On the other hand, a YCbCr signal of the constant luminance type has a configuration with reduced luminance changes depending on the output color, and is the YCbCr signal type often used in HDR video.

When the bit value is equal to 0, the elementary stream is a YCbCr signal of the non-constant luminance type (Y'C'bC'r), and an information processing device such as a playback device thus executes video playback by a process of outputting a YCbCr signal of the non-constant luminance type. This is a video output process corresponding to SDR video in many cases.

A bit value equal to 1 indicates that the elementary stream identified by the elementary PID (elementary_PID) includes a YCbCr signal of the constant luminance type (Y'cC'bcC'rc).

In the case of this configuration, an information processing device such as a playback device executes video playback by a process of outputting a YCbCr signal of the constant luminance type. This is a video output process corresponding to HDR video in many cases.

A bit value equal to 2 indicates that the type of YCbCr signal in the elementary stream identified by the elementary PID (elementary_PID) is not specified, and an information processing device such as a playback device thus performs an output signal generation process according to the display device.

### [4. Specific examples of video attribute information records]

Next, specific examples of the video attribute information described.

The video attribute information described with reference to FIGS. 11 to 16, namely,
(1) Video elementary stream type information (video_stream_type),
(2) Video elementary stream dynamic range identification flag (video_d_range),
(3) Video elementary stream transfer characteristics (gamma characteristics) information (transfer_characteristics),
(4) Video elementary stream color information (colour_primaries),
(5) Video elementary stream attribute information [(2)+(3)+(4)] (video_d_range2), and
(6) Video elementary stream YCbCr information (luma_chroma_signal_format)
are recorded in the Program Map Table (PMT) as video attribute information in elementary stream (ES) units.

Specifically, the information is recorded by utilizing the reserved areas (stuff bits) in the attribute information recording area in elementary stream units described with reference to FIG. 10.

Hereinafter, multiple specific example records of video attribute information will be described.

### [4-1. Attribute information record example 1: example of recording attribute information (1) (3) (4) (6)]

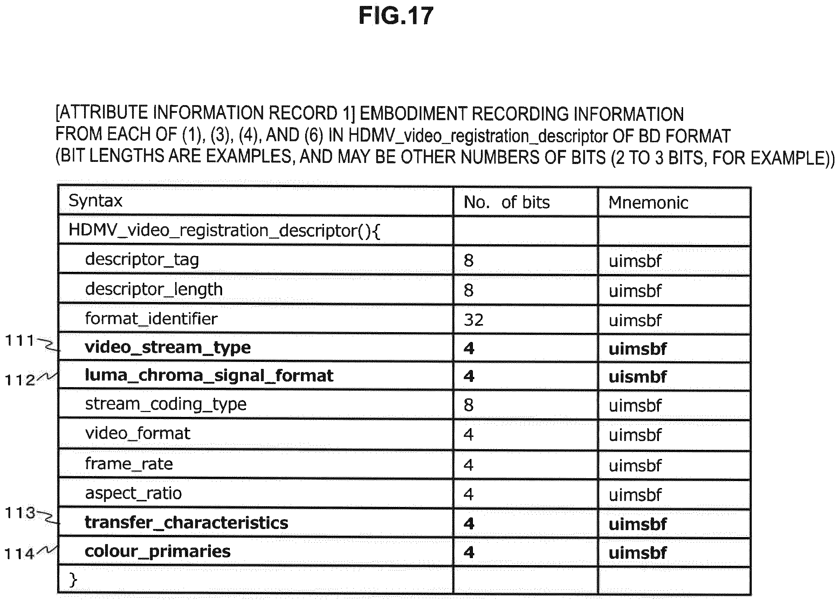

First, FIG. 17 will be referenced to describe an attribute information record example 1.

The attribute information record example 1 describes the example of recording (1), (3), (4), and (6) from among the attribute information (1) to (6) described above.

The data illustrated in FIG. 17 is the data described earlier with reference to FIG. 10, or in other words, data constituting the Program Map Table (PMT) in the PSI/SI information stored in a TS packet. Specifically, the data is an example of the [HDMV_video_registration_descriptor] constituting attribute information in elementary stream units recorded in the data component information (ES information) in the PMT.

The data fields 111 to 114 illustrated in FIG. 17 correspond to the reserved areas (stuff bits) 101 and 102 in the data illustrated in FIG. 10.

The example illustrated in FIG. 17 is an example of recording, in these reserved areas, the attribute information (1), (3), (4), and (6) from among the attribute information (1) to (6) described above.

In other words, the following attribute information is recorded.
(1) Video elementary stream type information (video_stream_type)
(3) Video elementary stream transfer characteristics (gamma characteristics) information (transfer_characteristics)
(4) Video elementary stream color information (colour_primaries)
(6) Video elementary stream YCbCr information (luma_chroma_signal_format)

In the data field 111, the (1) video elementary stream type information (video_stream_type) described earlier with reference to FIG. 11 is recorded as 4-bit data.

In the data field 112, the (6) video elementary stream YCbCr information (luma_chroma_signal_format) described earlier with reference to FIG. 16 is recorded as 4-bit data.

In the data field 113, the (3) video elementary stream transfer characteristics (gamma characteristics) information (transfer_characteristics) described earlier with reference to FIG. 13 is recorded as 4-bit data.

In the data field 114, the (6) video elementary stream YCbCr information (luma_chroma_signal_format) described earlier with reference to FIG. 16 is recorded as 4-bit data.

An information processing device that acquires a transport stream file from data read out from a recording medium or data input via an input unit or a communication unit and performs a process such as a playback process or a data conversion process, for example, reads out attribute information (metadata) in video elementary stream units illustrated in FIG. 17 from the Program Map Table (PMT) inside the PSI/SI recorded in the transport stream file.

On the basis of the read-out attribute information (metadata), the attributes of the video elementary stream corresponding to the PID which corresponds to the attribute information may be checked.

With the configuration illustrated in FIG. 17, the video attributes that may be checked are the following attributes.
(1) Video elementary stream type information (video_stream_type)
(3) Video elementary stream transfer characteristics (gamma characteristics) information (transfer_characteristics)
(4) Video elementary stream color information (colour_primaries)
(6) Video elementary stream YCbCr information (luma_chroma_signal_format)

An information processing device that executes data playback by processing a transport stream (TS) file read out from an information recording medium or a transport stream (TS) file input from a data input unit such as a reception unit, for example, becomes able to suitably perform a process of playing back the video data stored in the TS packets after first checking these attributes.

In other words, control of a playback process for SDR video or a playback process for HDR video may be executed accurately and efficiently.

In addition, in the case of an information processing device that converts an MPEG-2 TS file to an MP4 file for recording, it becomes possible to reliably perform a process of converting video data stored in the TS packets, or in other words, a process of converting to an MP4 file and recording metadata to the MP4 file, after first checking the video attributes on the basis of the data illustrated in FIG. 17.

### [4-2. Attribute information record example 2: example of recording attribute information (2) (3) (4) (6)]

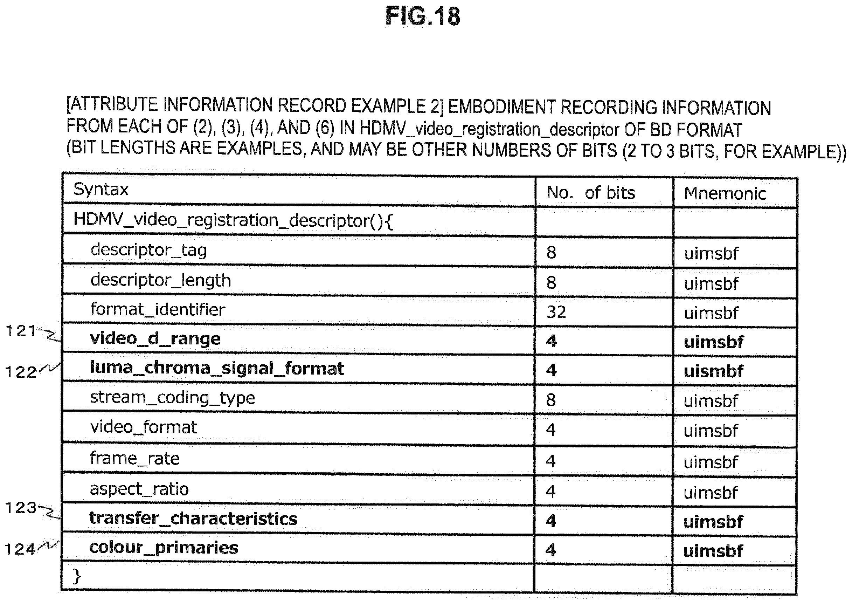

Next, FIG. 18 will be referenced to describe an attribute information record example 2.

The attribute information record example 2 describes the example of recording (2), (3), (4), and (6) from among the attribute information (1) to (6) described above.

Similarly to FIG. 17, the data illustrated in FIG. 18 is the data described earlier with reference to FIG. 10, or in other words, data constituting the Program Map Table (PMT) in the PSI/SI information stored in a TS packet. Specifically, the data is an example of the [HDMV_video_registration_descriptor] constituting attribute information in elementary stream units recorded in the data component information (ES information) in the PMT.

The data fields 121 to 124 illustrated in FIG. 18 correspond to the reserved areas (stuff bits) 101 and 102 in the data illustrated in FIG. 10.

The example illustrated in FIG. 18 is an example of recording, in these reserved areas, the attribute information (2), (3), (4), and (6) from among the attribute information (1) to (6) described above.

In other words, the following attribute information is recorded.
(2) Video elementary stream dynamic range identification flag (video_d_range)
(3) Video elementary stream transfer characteristics (gamma characteristics) information (transfer_characteristics)
(4) Video elementary stream color information (colour_primaries)
(6) Video elementary stream YCbCr information (luma_chroma_signal_format)

In the data field 121, the (2) video elementary stream dynamic range identification flag (video_d_range) described earlier with reference to FIG. 12 is recorded as 4-bit data.

In the data field 122, the (6) video elementary stream YCbCr information (luma_chroma_signal_format) described earlier with reference to FIG. 16 is recorded as 4-bit data.

In the data field 123, the (3) video elementary stream transfer characteristics (gamma characteristics) information (transfer_characteristics) described earlier with reference to FIG. 13 is recorded as 4-bit data.

In the data field 124, the (6) video elementary stream YCbCr information (luma_chroma_signal_format) described earlier with reference to FIG. 16 is recorded as 4-bit data.

An information processing device that acquires a transport stream file from data read out from a recording medium or data input via an input unit or a communication unit and performs a process such as a playback process or a data conversion process, for example, reads out attribute information (metadata) in video elementary stream units illustrated in FIG. 18 from the Program Map Table (PMT) inside the PSI/SI recorded in the transport stream file.

On the basis of the read-out attribute information (metadata), the attributes of the video elementary stream corresponding to the PID which corresponds to the attribute information may be checked.

With the configuration illustrated in FIG. 18, the video attributes that may be checked are the following attributes.
(2) Video elementary stream dynamic range identification flag (video_d_range)
(3) Video elementary stream transfer characteristics (gamma characteristics) information (transfer_characteristics)
(4) Video elementary stream color information (colour_primaries)
(6) Video elementary stream YCbCr information (luma_chroma_signal_format)

An information processing device that executes data playback by processing a transport stream (TS) file read out from an information recording medium or a transport stream (TS) file input from a data input unit such as a reception unit, for example, becomes able to suitably perform a process of playing back the video data stored in the TS packets after first checking these attributes.

In other words, control of a playback process for SDR video or a playback process for HDR video may be executed accurately and efficiently.

In addition, in the case of an information processing device that converts an MPEG-2 TS file to an MP4 file for recording, it becomes possible to reliably perform a process of converting video data stored in the TS packets, or in other words, a process of converting to an MP4 file and recording metadata to the MP4 file, after first checking the video attributes on the basis of the data illustrated in FIG. 18.

### [4-3. Attribute information record example 3: example of recording attribute information (5) (6)]

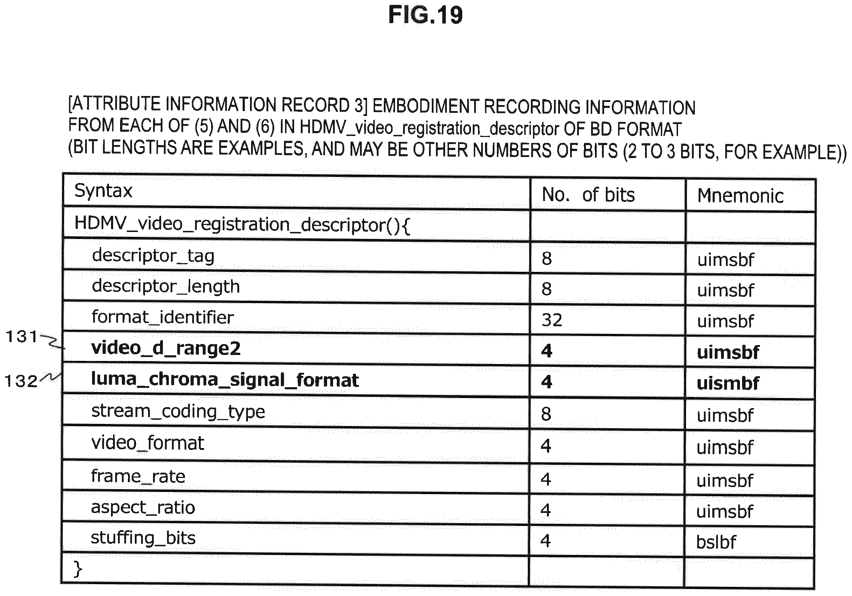

Next, FIG. 19 will be referenced to describe an attribute information record example 3.

The attribute information record example 3 describes the example of recording (5) and (6) from among the attribute information (1) to (6) described above.

Similarly to FIGS. 17 and 18, the data illustrated in FIG. 19 is the data described earlier with reference to FIG. 10, or in other words, data constituting the Program Map Table (PMT) in the PSI/SI information stored in a TS packet. Specifically, the data is an example of the [HDMV_video_registration_descriptor] constituting attribute information in elementary stream units recorded in the data component information (ES information) in the PMT.

The data fields 131 and 132 illustrated in FIG. 19 correspond to the reserved area (stuff bits) 101 in the data illustrated in FIG. 10.

The example illustrated in FIG. 19 is an example of recording, in this reserved area, the attribute information (5) and (6) from among the attribute information (1) to (6) described above.

In other words, the following attribute information is recorded.
(5) Video elementary stream attribute information [(2)+(3)+(4)] (video_d_range2)
(6) Video elementary stream YCbCr information (luma_chroma_signal_format)

In the data field 131, the (5) video elementary stream attribute information [(2)+(3)+(4)] (video_d_range2) described earlier with reference to FIG. 15 is recorded as 4-bit data.

In the data field 132, the (6) video elementary stream YCbCr information (luma_chroma_signal_format) described earlier with reference to FIG. 16 is recorded as 4-bit data.

An information processing device that acquires a transport stream file from data read out from a recording medium or data input via an input unit or a communication unit and performs a process such as a playback process or a data conversion process, for example, reads out attribute information (metadata) in video elementary stream units illustrated in FIG. 19 from the Program Map Table (PMT) inside the PSI/SI recorded in the transport stream file.

On the basis of the read-out attribute information (metadata), the attributes of the video elementary stream corresponding to the PID which corresponds to the attribute information may be checked.

With the configuration illustrated in FIG. 19, the video attributes that may be checked are the following attributes.
(5) Video elementary stream attribute information [(2)+(3)+(4)] (video_d_range2)
(6) Video elementary stream YCbCr information (luma_chroma_signal_format)

An information processing device that executes data playback by processing a transport stream (TS) file read out from an information recording medium or a transport stream (TS) file input from a data input unit such as a reception unit, for example, becomes able to suitably perform a process of playing back the video data stored in the TS packets after first checking these attributes.

In other words, control of a playback process for SDR video or a playback process for HDR video may be executed accurately and efficiently.

In addition, in the case of an information processing device that converts an MPEG-2 TS file to an MP4 file for recording, it becomes possible to reliably perform a process of converting video data stored in the TS packets, or in other words, a process of converting to an MP4 file and recording metadata to the MP4 file, after first checking the video attributes on the basis of the data illustrated in FIG. 19.

### [5. Example data processing sequences executed by information processing device]

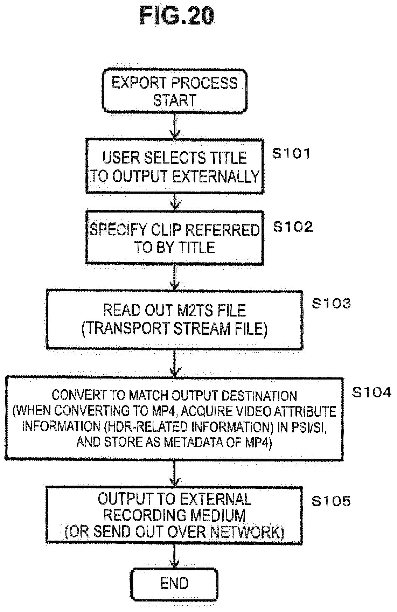

Next, the flowcharts illustrated in FIG. 20 and subsequent drawings will be referenced to describe example data processing sequences executed by an information processing device.

### [5-1. Conversion processing sequence from MPEG-2 TS format to MP4 format]

First, the flowchart illustrated in FIG. 20 will be referenced to describe the sequence of a process by which an information processing device converts an MPEG-2 TS file input from a recording medium, such as a BD, or from an external source into the MP4 file format, and records the MP4 file to a medium such as a flash memory, or outputs the MP4 file externally via an output unit.

The flow illustrated in FIG. 20 is executed under control by a data processing unit of the information processing device, provided with a CPU or the like that includes a program execution function. The data processing unit reads out and executes a program stored in a storage unit.

Hereinafter, the processing of each step will be described sequentially.

### (Step S101)

First, in step S101, the user selects the title of the content to be format-converted and externally output.

For example, title selection is executed by displaying on a display unit a content title list read out from a BD inserted into the information processing device.

### (Step S102)

In step S102, the data processing unit of the information processing device specifies the clip (Clip Information file and Clip AV Stream file) corresponding to the title selected by the user.

### (Step S103)

In step S103, the data processing unit of the information processing device reads out the Clip AV Stream file specified in step S102, or in other words, an MPEG-2 TS file.

The MPEG-2 TS file is a file having the structure described earlier with reference to FIG. 3.

### (Step S104)

In step S104, the data processing unit of the information processing device executes format conversion of the MPEG-2 TS file that was read out in step S103, and generates an MP4 file.

During this format conversion, the Program Map Table (PMT) of the attribute information (PSI/SI) stored in TS packets of the MPEG-2 TS file is referenced, the attributes of the video data stored in the MPEG-2 TS file are checked, and processing is executed according to the checked attributes.

Specifically, it is checked whether the video data to be format-converted is HDR video or SDR video, for example, and according to the check result, a process of recording the attribute information of the video stored in the MP4 file in a video metadata storage area of the MP4 file is performed, for example.

Note that the video attributes checked on the basis of the Program Map Table (PMT) includes the following attributes, as described earlier with reference to FIGS. 11 to 16.
(1) Video elementary stream type information (video_stream_type)
(2) Video elementary stream dynamic range identification flag (video_d_range)
(3) Video elementary stream transfer characteristics (gamma characteristics) information (transfer_characteristics)
(4) Video elementary stream color information (colour_primaries)
(5) Video elementary stream attribute information [(2)+(3)+(4)] (video_d_range2)
(6) Video elementary stream YCbCr information (luma_chroma_signal_format)

An information processing device that converts an MPEG-2 TS file to an MP4 file for recording thus becomes able to reliably perform the processes of converting video data stored in the TS packets to an MP4 file, recording metadata to the MP4 file, and the like after first checking the video attributes on the basis of each of the above data.

### (Step S105)

In step S105, the data processing unit of the information processing device records the MP4 file generated in step S104 to a second recording medium such as flash memory, or alternatively, outputs the MP4 file to external equipment or an external medium via a communication unit, an output unit, or the like.

According to these processes, the format conversion from an MPEG-2 TS file to an MP4 file and the recording of the MP4 file to a second medium or external outputting is completed.

During format conversion, the information processing device executes control depending on whether the video stream to be processed is HDR video or SDR video. Specifically, video attributes recorded in the MPEG-2 TS file (such as whether the video is HDR video or SDR video, for example) are correctly recorded in a metadata recording area of the MP4 file.

A playback device that executes a process of playing back the MP4 file thus becomes able to reference this metadata and execute the correct playback process according to the video attributes.

### [5-2. Playback processing sequence for MPEG-2 TS format data]

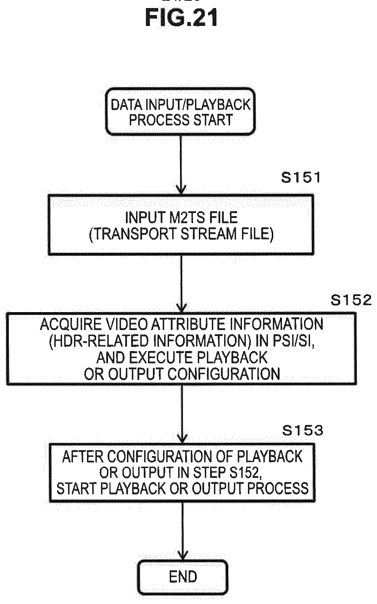

Next, the flowchart illustrated in FIG. 21 will be referenced to describe the sequence of a process by which an information processing device executes playback of an MPEG-2 TS file input from a recording medium or an external source.

The flow illustrated in FIG. 21 is executed under control by a data processing unit of the information processing device, provided with a CPU or the like that includes a program execution function. The data processing unit reads out and executes a program stored in a storage unit.

Hereinafter, the processing of each step will be described sequentially.

### (Step S151)

First, in step S151, the data processing unit of the information processing device inputs an MPEG-2 TS file from a recording medium or an external source.

### (Step S152)

In step S152, the data processing unit of the information processing device references the Program Map Table (PMT) of the attribute information (PSI/SI) stored in TS packets of the MPEG-2 TS file input in step S151, checks the attributes of the video data stored in the MPEG-2 TS file, and executes processing according to the checked attributes.

Specifically, it is checked whether the video data to be played back is HDR video or SDR video, for example, and configuration of the playback process or output process is executed according to the check result.

Note that the video attributes checked on the basis of the Program Map Table (PMT) includes the following attributes, as described earlier with reference to FIGS. 11 to 16.
(1) Video elementary stream type information (video_stream_type)
(2) Video elementary stream dynamic range identification flag (video_d_range)
(3) Video elementary stream transfer characteristics (gamma characteristics) information (transfer_characteristics)
(4) Video elementary stream color information (colour_primaries)
(5) Video elementary stream attribute information [(2)+(3)+(4)] (video_d_range2)
(6) Video elementary stream YCbCr information (luma_chroma_signal_format)

The information processing device that executes playback of the MPEG-2 TS file checks the video attributes on the basis of each of the above data, and if the video data stored in the TS packets is HDR video, the information processing device is able to execute playback control or output control for HDR video, whereas if the video data stored in the TS packets is SDR video, the information processing device is able to execute playback control or output control for SDR video.

### (Step S153)

In step S153, the data processing unit of the information processing device executes the playback or output of the video data stored in the TS packets according to the configuration executed in step S152.

According to these processes, the data stored in the MPEG-2 TS file is played back.

The playback device becomes able to execute control depending on whether the video stream to be played back is HDR video or SDR video.

In other words, since the video attributes (such as whether the video is HDR video or SDR video, for example) recorded in the MPEG-2 TS file are acquired directly from the MPEG-2 TS file, it becomes possible to execute the correct playback process according to the attributes (HDR or SDR, for example) of the video stored in the TS packets, even if a database file such as a playlist file cannot be acquired, for example.

### [5-3. MPEG-2 TS file generation processing sequence (configuring video stream type)]

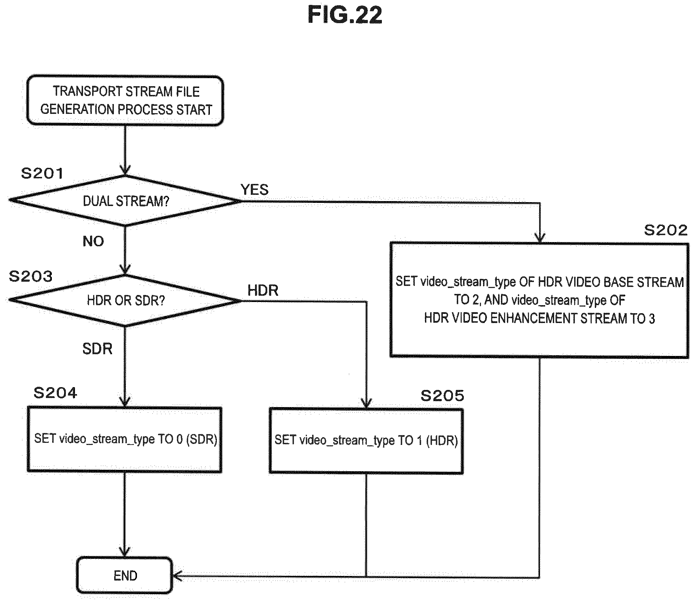

Next, the flowchart illustrated in FIG. 22 will be referenced to describe the processing sequence by which an information processing device executes a process of generating an MPEG-2 TS file.

For example, in this processing sequence, HDR video or SDR video captured by a capture device is input, and a process of generating an MPEG-2 TS file storing the input video is executed.

The flow illustrated in FIG. 22 is executed under control by a data processing unit of the information processing device, provided with a CPU or the like that includes a program execution function. The data processing unit reads out and executes a program stored in a storage unit.

Hereinafter, the processing of each step will be described sequentially.

### (Step S201)

First, in step S201, the data processing unit of the information processing device determines whether the video stored in the MPEG-2 TS file is a dual stream or a single stream.

As described earlier with reference to FIG. 11, there are three types of video streams:
SDR video single stream;
HDR video single stream; and
HDR video dual stream.

An HDR video dual stream is made up of the two (dual) streams of an HDR video base stream and an HDR video enhancement stream.

In step S201, the data processing unit of the information processing device determines whether the video stored in the MPEG-2 TS file is a dual stream or a single stream.

In the case of a dual stream, the process proceeds to step S202, while in the case of a single stream, the process proceeds to step S203.

### (Step S202)

If the video stored in the MPEG-2 TS file is a dual stream, the process proceeds to step S202.

In the case of a dual stream, the video stream stored in the MPEG-2 TS file is made up of the following two video streams:
HDR video base stream; and
HDR video enhancement stream.

Although stored in respectively different TS packets, at this point, attribute information for each stream (elementary stream (ES)) is recorded in the Program Map Table (PMT) of the PSI/SI.

Specifically,
the video stream type (video_stream_type) of the HDR video base stream is set to 2, and
the video stream type (video_stream_type) of the HDR video enhancement stream is set to 3.

These settings correspond to the attribute information configuration example described earlier with reference to FIG. 11.

### (Step S203)

On the other hand, in step S201, if the video stored in the MPEG-2 TS file is a single stream, the process proceeds to step S203.

In step S203, it is determined whether the video stored in the MPEG-2 TS file is
an HDR video stream, or
an SDR video stream.

If the video stored in the MPEG-2 TS file is an SDR video stream, the process proceeds to step S204.

If the video stored in the MPEG-2 TS file is an HDR video stream, the process proceeds to step S205.

### (Step S204)

If the video stored in the MPEG-2 TS file is an SDR video stream, in step S204, the attribute information for this stream (elementary stream (ES)) is recorded in the Program Map Table (PMT) of the PSI/SI.

Specifically,
the video stream type (video_stream_type) of the SDR video stream is set to 0.

This setting corresponds to the attribute information configuration example described earlier with reference to FIG. 11.

### (Step S205)

On the other hand, if the video stored in the MPEG-2 TS file is an HDR video stream, in step S205, the attribute information for this stream (elementary stream (ES)) is recorded in the Program Map Table (PMT) of the PSI/SI.

Specifically,
the video stream type (video_stream_type) of the HDR video stream is set to 1.

This setting corresponds to the attribute information configuration example described earlier with reference to FIG. 11.

### [5-4. MPEG-2 TS file generation processing sequence (configuring attributes other than video stream type)]

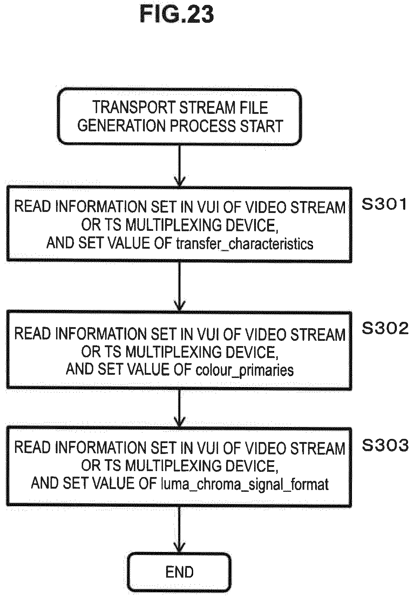

Next, the flowchart illustrated in FIG. 23 will be referenced to describe the processing sequence by which an information processing device executes a process of generating an MPEG-2 TS file.

The flow in FIG. 22 describes only the video stream type configuration sequence, but the flow in FIG. 23 is an attribute configuration sequence for attributes other than the video stream type.

When generating an MPEG-2 TS file, the flow illustrated in FIG. 22 and the flow illustrated in FIG. 23 are executed successively.

The flowchart illustrated in FIG. 23, similarly to the flow illustrated in FIG. 22, is a processing sequence in which HDR video or SDR video captured by a capture device is input, and a process of generating an MPEG-2 TS file storing the input video is executed.

The flow illustrated in FIG. 23 is executed under control by a data processing unit of the information processing device, provided with a CPU or the like that includes a program execution function. The data processing unit reads out and executes a program stored in a storage unit.

Hereinafter, the processing of each step will be described sequentially.

### (Step S301)

First, in step S301, the data processing unit of the information processing device acquires the transfer characteristics (transfer-characteristics) of the video stored in the MPEG-2 TS file, and records attribute information about the acquired transfer characteristics (transfer-characteristics) of the video for each stream (elementary stream (ES)) in the Program Map Table (PMT) of the PSI/SI.

Specifically, the configuration values described earlier with reference to FIG. 13 are recorded.

In other words, one of the following bit values is recorded.
0 (=0000): Unspecified
1 (=0001): Indicates that the elementary stream is video that was created using the optical-electro transfer function (OETF) conforming to ITU-R BT.709-5 (assumes that the display displaying the video of the elementary stream executes a display process applying the electro-optical transfer function (EOTF) conforming to ITU-R BT.1886).
2 (=0010): Assumes that the display displaying the video of the elementary stream executes a display process applying the electro-optical transfer function (EOTF) conforming to SMPTE ST 2084.

Note that the process of acquiring the transfer characteristics (transfer_characteristics) of the input video is conducted by a process of reading from attribute information (VUI) attached to the input video, or acquiring from information input into a TS multiplexing unit of the information processing device.

### (Step S302)

Next, in step S302, the data processing unit of the information processing device acquires the color information (colour_primaries) of the video stored in the MPEG-2 TS file, and records attribute information about the acquired color information (colour_primaries) of the video for each stream (elementary stream (ES)) in the Program Map Table (PMT) of the PSI/SI.

Specifically, the configuration values described earlier with reference to FIG. 14 are recorded.

In other words, one of the following bit values is recorded.
0 (=0000): Unspecified
1 (=0001): Indicates that the elementary stream has the three color primaries and reference color conforming to ITU-R BT.709-5.
2 (=0010): Indicates that the elementary stream has the three color primaries and reference color conforming to ITU-R BT.2020.

Note that the process of acquiring the color information (colour_primaries) of the input video is conducted by a process of reading from attribute information (VUI) attached to the input video, or acquiring from information input into a TS multiplexing unit of the information processing device.

### (Step S303)

Next, in step S303, the data processing unit of the information processing device acquires the YCbCr information (luma_chroma_signal_format) of the video stored in the MPEG-2 TS file, and records attribute information about the acquired YCbCr information (luma_chroma_signal_format) of the video for each stream (elementary stream (ES)) in the Program Map Table (PMT) of the PSI/SI.

Specifically, the configuration values described earlier with reference to FIG. 16 are recorded.

In other words, one of the following bit values is recorded.
0 (=0000): Indicates that the elementary stream includes a YCbCr signal of the non-constant luminance type (Y'C'bC'r).
1 (=0001): Indicates that the elementary stream includes a YCbCr signal of the constant luminance type (Y'cC'bcC'rc).
2 (=0010): Unspecified

Note that the process of acquiring the YCbCr information (luma_chroma_signal_format) of the input video is conducted by a process of reading from attribute information (VUI) attached to the input video, or acquiring from information input into a TS multiplexing unit of the information processing device.

When generating an MPEG-2 TS file, the flow illustrated in FIG. 22 and the flow illustrated in FIG. 23 are executed successively.

By these processes, a Program Map Table (PMT) storing video attribute information in stream units as illustrated earlier in FIG. 17, for example, is completed, and an MPEG-2 TS file with PSI/SI including the PMT stored in TS packets is generated.

Note that the processes described with reference to FIGS. 22 and 23 are processing sequences corresponding to the attribute information record example illustrated in FIG. 17.

In the case of recording attribute information in accordance with the record example illustrated in FIG. 18 or the record example illustrated in FIG. 19, a process of acquiring the attribute information included in each record example and recording the attribute information in the PMT is executed.

### [6. Example configuration of information processing device]

Next, an example configuration of an information processing device that executes processing in accordance with the embodiment described above will be described.

### [6-1. Example configuration of information processing device executing format conversion and data recording process]

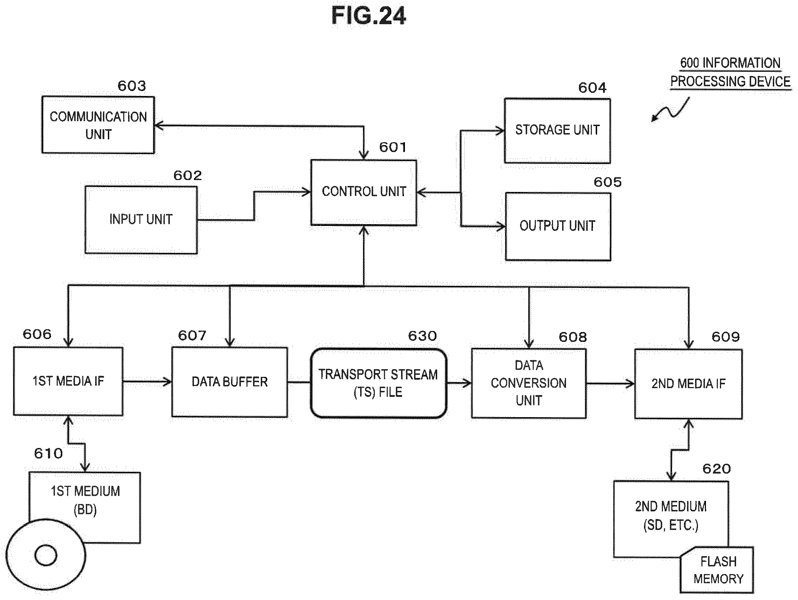

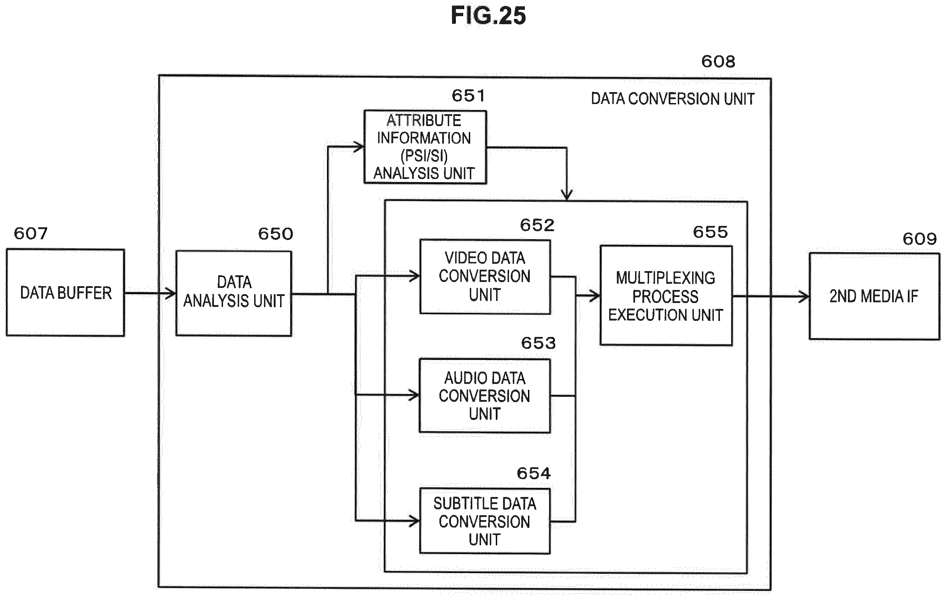

First, FIGS. 24 and 25 will be referenced to describe an example configuration of an information processing device that executes a format conversion and data recording process.

The information processing device 600 illustrated in FIG. 24 is an information processing device that converts MPEG-2 TS format data recorded on a first medium 610, and records MP4 format data generated by the conversion to a second medium 620.

The information processing device 600 performs a so-called copy process of reading out data recorded on the first medium 610, which is an information recording medium such as a Blu-ray (registered trademark) Disc (BD), for example, and recording to the second medium 620, which is an information recording medium such as flash memory.

Alternatively, a process of recording data input via a communication unit 603 to the second medium 620, such as flash memory, is conducted.

Note that the data format of the data input via the first medium 610 or the communication unit 603 is taken to be a first format, while the format of the data to record onto the second medium 620 is taken to be a second format.

When the information processing device records the first format data input via the first medium 610 or the communication unit 603 to the second medium 620, such as flash memory, the information processing device conducts a process of converting the first format data to second format data.

Note that in the embodiment described above, the format of the data input from the first medium 610 or the communication unit 603 is the MPEG-2 TS format, while the recording format of the second medium is the MP4 format.

During the process of recording data to the second medium 620, the information processing device 600 executes format conversion from the MPEG-2 TS format to the MP4 format.

As illustrated in FIG. 24, the information processing device 600 includes a control unit 601, an input unit 602, a communication unit 603, a storage unit 604, an output unit 605, a first media interface (IF) 606, a data buffer 607, a data conversion unit 608, and a second media IF 609.

The control unit 601 controls data processing executed in the information processing device 600, such as data recording and playback using media, and the process of copying data between media. The control of these processes is conducted by following a program stored in the storage unit 604, for example.

The input unit 602 is an input unit such as switches, buttons, or a touch panel operable by the user, and is an input unit for issuing instruction input for various processes such as playback, copying, and recording.

In addition, the input unit 602 may also be configured to include a capture unit and a microphone that input video, audio, and the like to record to a medium.

The communication unit 603 communicates with an external server or external equipment, for example, and is used for various communication processes, such as the acquisition of data to record to a medium, control information related to the data to record, or permission information for a copy process.

The storage unit 604 is used as a storage area for information such as programs executed by the control unit 601 and parameters used in program execution, and is also used as a work area or the like during program execution.

Specifically, the storage unit 604 is also used as an area in which to temporarily store data read out from the first medium 610 or data input via the communication unit 603 when recording data to the second medium 620.

The storage unit 604 is made up of RAM, ROM, and the like, for example.

The output unit 605 is made up of an output unit to an external device, and an output unit for playback data from media. For example, the output unit 605 includes a display, speakers, and the like which are used to display the progress of the data recording process with respect to the second medium 620, display messages to the user, and the like.

The first media interface (IF) 606 is an interface functioning as a data recording and playback unit that accesses the first medium 610, such as a Blu-ray (registered trademark) Disc (BD), for example, and performs data recording or data readout with respect to the first medium 610.

The data buffer 607 is a buffer that temporarily stores data read out from the first medium 610 or data input from the communication unit 603. For example, the data buffer 607 temporarily stores data to record to the second medium 620.

The data conversion unit 608 executes a format conversion process of converting data in the first format, which is the format of data recorded on the first medium 610 or data input via the communication unit 603, to the second format, which is the data format when recording to the second medium 620 that acts as the destination of data recording.

The second media interface (IF) 609 is an interface functioning as a data recording and playback unit that accesses the second medium 620 and performs a data recording or readout process with respect to the second medium 620.

In this way, the information processing device 600 conducts a process of record first format data input via the first medium 610 or the communication unit 603 to the second medium 620, such as flash memory. During this process, a process of converting the first format data to second format data is conducted.

Note that the first format refers to MPEG-2 TS format data, for example, while the second format refers to MP4 format data.

Note that the information processing device 600 may also perform a process of acquiring data that cannot be acquired from the first medium 610 from an external server via the communication unit 603, and record the data read out from the first medium 610 together with received data acquired via the communication unit 603 to the second medium 620.

In addition, in the configuration illustrated in FIG. 24, the first medium 610 is a Blu-ray (registered trademark) Disc (BD), for example. The second medium 620 is flash memory such as an SD card, for example.

Note that the first medium 610 and the second medium 620 are not limited to the above combination, and various combinations are possible.

Next, a detailed configuration of the data conversion unit 608 will be described with reference to FIG. 25.

As illustrated in FIG. 25, the data conversion unit 608 includes a data analysis unit 650, an attribute information (PSI/SI) analysis unit 651, a video data conversion unit 652, an audio data conversion unit 653, a subtitle data conversion unit 654, and a multiplexing process execution unit 655.

The data analysis unit 650, on the basis of the identifier (program ID (PID)) set in the data (packets) read out from the first medium 610 or input via the communication unit 603 and stored in the data buffer 607, categorizes each piece of data (packet) into the following data categories:
video data;
audio data;
subtitle data; and
attribute information (PSI/SI).

The data analysis unit 650 outputs the attribute information (PSI/SI) to the attribute information (PSI/SI) analysis unit 651, and additionally outputs the video data to the video data conversion unit 652, the audio data to the audio data conversion unit 653, and the subtitle data to the subtitle data conversion unit 654.

The attribute information (PSI/SI) analysis unit 651 acquires attribute information in elementary stream units from the Program Map Table (PMT) inside the PSI/SI.

The Program Map Table (PMT) has the structure described earlier with reference to FIG. 9, in which is recorded the video attribute information and the like of a video elementary stream described with reference to FIGS. 17 to 19, for example.

The video attribute information in stream (ES) units recorded in the PMT is the following information described earlier with reference to FIGS. 11 to 16, for example.
(1) Video elementary stream type information (video_stream_type)
(2) Video elementary stream dynamic range identification flag (video_d_range)
(3) Video elementary stream transfer characteristics (gamma characteristics) information (transfer_characteristics)
(4) Video elementary stream color information (colour_primaries)
(5) Video elementary stream attribute information [(2)+(3)+(4)] (video_d_range2)
(6) Video elementary stream YCbCr information (luma_chroma_signal_format)

The attribute information (PSI/SI) analysis unit 651 acquires the above information from the Program Map Table (PMT) inside the PSI/SI, for example, and outputs to the multiplexing process execution unit 655.

The multiplexing process execution unit 655 generates an MP4 file in which attribute information corresponding to the above (1) to (6) is recorded in a metadata recording area corresponding to the video data stored in the MP4 file.

The video data conversion unit 652, the audio data conversion unit 653, and the subtitle data conversion unit 654 execute processes of converting the data format of input data (first format), such as MPEG-2 TS format data, for example, to a second format to record to the second medium 620, specifically MP4 format data, for example.

In other words, the video data conversion unit 652 generates video data in MP4 format, which is the data recording format for the second medium 620, and outputs to the multiplexing process execution unit 655.

The audio data conversion unit 653 generates audio data in MP4 format and outputs to the multiplexing process execution unit 655.

The subtitle data conversion unit 654 generates subtitle data in MP4 format and outputs to the multiplexing process execution unit 655.

The multiplexing process execution unit 655 executes a process of multiplexing respective data, such as
(a) video format data in the second format (MP4) generated by the video data conversion unit 652,
(b) audio format data in the second format (MP4) generated by the audio data conversion unit 653,
(c) subtitle format data in the second format (MP4) generated by the subtitle data conversion unit 654, and
(d) metadata in the second format (MP4) generated by the attribute information (PSI/SI) analysis unit 651,
for example, and generates recording data in the second format (MP4).

The data generated by the multiplexing process execution unit 655 is recorded onto the second medium 620 via the second media interface 609.

In this way, the information processing device 600 executes a process of converting data in a first format (MPEG-2 TS format) recorded on the first medium 610 or input via the communication unit 603 to a second format (MP4), which is the recording format of a second medium 620, and recording onto the second medium 620.

### [6-2. Example configuration of information processing device executing data playback or data generation and recording process]

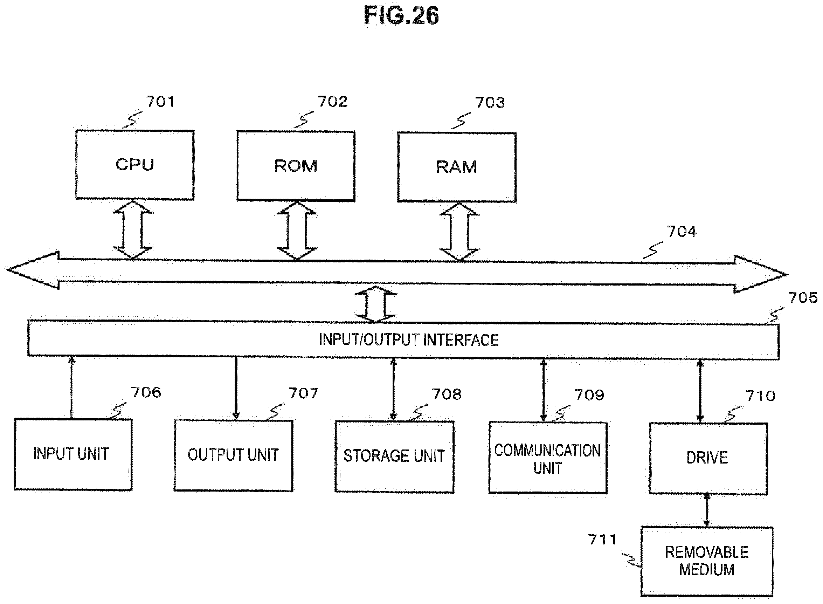

Next, an example hardware configuration of an information processing device that executes an MP4 format data playback process or an information processing device that executes an MP4 format data generation process, recording process, and the like will be described with reference to FIG. 26.

A central processing unit (CPU) 701 functions as a data processing unit that executes various processes according to a program stored in read-only memory (ROM) 702 or a storage unit 708. For example, processes following the sequences described in the embodiment described above are executed. Random access memory (RAM) 703 stores information such as programs executed by the CPU 701, and data. The CPU 701, ROM 702, and RAM 703 are interconnected by a bus 704.

The CPU 701 is connected to an input/output interface 705 via the bus 704. Connected to the input/output interface 705 are an input unit 706, which includes devices such as various switches, a keyboard, a mouse, and a microphone, and an output unit 707, which includes devices such as a display and one or more speakers. The CPU 701 executes various processes in response to commands input from the input unit 706, and outputs processing results to the output unit 707, for example.

A storage unit 708 connected to the input/output interface 705 includes a hard disk or the like, for example, and stores programs executed by the CPU 701 and various data. A communication unit 709 functions as a transceiving unit for data communication via a network such as the Internet or a local area network, additionally functions as a transceiving unit for broadcast waves, and communicates with external devices.

A drive 710 connected to the input/output interface 705 drives a removable medium 711 such as a magnetic disk, an optical disc, a magneto-optical disc, or semiconductor memory such as a memory card, and executes the recording or reading of data.

Note that the encoding or decoding of data is executable as a process by the CPU 701 acting as the data processing unit, but a configuration equipped with a codec in the form of dedicated hardware for executing an encoding process or a decoding process is also acceptable.

### [7. Summary of configuration according to embodiment of present disclosure]

The foregoing thus provides a detailed explanation of embodiments of the present disclosure with reference to specific embodiments. However, it is obvious that persons skilled in the art may make modifications and substitutions to these embodiments without departing from the gist of the present disclosure. In other words, the present disclosure has been disclosed by way of example, and should not be interpreted in a limited manner. The gist of the present disclosure should be determined in consideration of the claims.

In addition, it is possible to execute the processes described in this specification in hardware, in software, or in a compound configuration of both. In the case of executing processes in software, a program stating a processing sequence may be installed onto memory in a computer built into special-purpose hardware and executed, or alternatively, the program may be installed and executed on a general-purpose computer capable of executing various processes. For example, the program may be prerecorded onto a recording medium. Besides installing the program onto a computer from a recording medium, the program may also be received via a network such as a local area network (LAN) or the Internet, and installed onto a built-in recording medium such as a hard disk.

Note that the various processes described in the specification not only may be executed in a time series in the order described, but may also be executed in parallel or individually according to the processing performance of the device executing the process, or as needed. Also, in this specification, the term "system" refers to a logical aggregate configuration of multiple devices, and the respective devices of the configuration are not limited to being inside the same housing.

### Industrial Applicability

Thus, as described above, according to a configuration of an embodiment of the present disclosure, there is realized a configuration that acquires video attribute information from a transport stream (TS) file, and executes a process according to the acquired attributes.

Specifically, a data processing unit acquires video attribute information stored in a TS file storing data to be processed, and executes format conversion or an output process applying the acquired video attribute information. The video attribute information is video attribute information in video stream units stored in a transport stream (TS) file, and at least includes video attribute information enabling identification of whether each video stream is high dynamic range (HDR) video or standard dynamic range (SDR) video. The data processing unit executes control depending on whether the video stream to be subjected to the format conversion or the output process is HDR video or SDR video.

According to this configuration, there is realized a configuration that acquires video attribute information from a transport stream (TS) file, and executes a process according to the acquired attributes.

### Reference Signs List

- 10: information recording medium
- 11: management information configuration section (AACS directory)
- 12: data section (BDMV directory)
- 50: first medium
- 51: transport stream (TS) file
- 60: information processing device
- 61: MP4 format data file
- 65: second medium
- 70: transmitting device
- 80: transport stream (TS) file
- 90: receiving device
- 600: information processing device
- 601: control unit
- 602: input unit
- 603: communication unit
- 604: storage unit
- 605: output unit
- 606: first media interface
- 607: data buffer
- 608: data conversion unit
- 609: second media interface
- 610: first medium
- 620: second medium
- 650: data analysis unit
- 651: attribute information (PSI/SI) analysis unit
- 652: video data conversion unit
- 653: audio data conversion unit
- 654: subtitle data conversion unit
- 655: multiplexing process execution unit
- 701: CPU
- 702: ROM
- 703: RAM
- 704: bus
- 705: input/output interface
- 706: input unit
- 707: output unit
- 708: storage unit
- 709: communication unit
- 710: drive
- 711: removable medium

## Claims

1. An information processing device (600) comprising:
a data processing unit configured to
acquire a transport stream, TS, file storing data to be processed,
acquire video attribute information stored in a Program Map Table, PMT, in PSI/SI data inside the transport stream, TS, file, and
execute format conversion applying the acquired video attribute information, wherein
the video attribute information is video attribute information in video stream units stored in the transport stream, TS, file, and includes various attribute information related to individual video streams and comprises information enabling identification of whether each video stream is high dynamic range, HDR, video or standard dynamic range, SDR, video,
the data processing unit is configured to execute format conversion for converting the transport stream, TS, file to an MP4 file, and to execute conversion control depending on whether the video stream to be subjected to the format conversion is HDR video or SDR video; wherein
the data processing unit is further configured to execute a process of acquiring the video attribute information in video stream units stored in the Program Map Table, PMT, in PSI/SI data inside the transport stream, TS, file, and storing the acquired video attribute information in a metadata storage area of the MP4 file based on the conversion control.

2. The information processing device according to claim 1, wherein
the data processing unit
executes a process of playing back data stored in the transport stream, TS, file, and
acquires the video attribute information in video stream units stored in the transport stream, TS, file, determines whether data to be played back is HDR video or SDR video, and controls playback according to a determination result.

3. The information processing device according to claim 1, wherein
if the video stream stored in the transport stream, TS, file is HDR video,
the video attribute information includes information enabling identification of whether the HDR video stream is a base HDR video stream or an enhancement HDR video stream.

4. The information processing device according to claim 1, wherein
the video attribute information includes information enabling identification of transfer characteristics of the video stream stored in the transport stream, TS, file; or
the video attribute information includes information enabling identification of color information of the video stream stored in the transport stream, TS, file; or
the video attribute information includes information enabling identification of YCbCr information of the video stream stored in the transport stream, TS, file.

5. An information processing method executed in an information processing device, the information processing method comprising, by a data processing unit of the information processing device:
acquiring a transport stream, TS, file storing data to be processed; and
acquiring video attribute information stored in a Program Map Table, PMT, in PSI/SI data inside the transport stream, TS, file, and executing format conversion or an output process applying the acquired video attribute information, wherein
the video attribute information is video attribute information in video stream units stored in the transport stream, TS, file, and includes various attribute information related to individual video streams and comprises information enabling identification of whether each video stream is high dynamic range, HDR, video or standard dynamic range, SDR, video, and
in the executing of the process, the data processing unit executes format conversion converting the transport stream, TS, file to an MP4 file, and executes conversion control depending on whether the video stream to be subjected to the format conversion is HDR video or SDR video; wherein
the data processing unit further executes a process of acquiring the video attribute information in video stream units stored in the Program Map Table, PMT, in PSI/SI data inside the transport stream, TS, file, and storing the acquired video attribute information in a metadata storage area of the MP4 file based on the conversion control.

6. A program causing information processing to be executed in an information processing device, the program causing a data processing unit of the information processing device to execute the method of claim 5.

## Patentansprüche

1. Informationsverarbeitungsvorrichtung (600) umfassend:
eine Datenverarbeitungseinheit, die dazu ausgelegt ist eine Transportstromdatei, TS-Datei zu erfassen, die die zu verarbeitenden Daten speichert,
die in einer "Program Map Table", PMT, gespeicherten Videoattributinformationen in PSI/SI-Daten innerhalb der Transportstromdatei, TS-Datei, zu erfassen und
eine Formatumwandlung unter Anwendung der erfassten Videoattributinformationen auszuführen, wobei
die Videoattributinformationen Videoattributinformationen in Videostromeinheiten sind,
die in der Transportstromdatei, TS-Datei, gespeichert sind, und verschiedene Attributinformationen enthalten,
die sich auf einzelne Videoströme beziehen, und Informationen umfassen, die eine Identifizierung ermöglichen, ob jeder Videostrom ein Video mit hohem Dynamikbereich, HDR, oder ein Video mit Standard-Dynamikbereich, SDR, ist,
die Datenverarbeitungseinheit dazu ausgelegt ist, eine Formatumwandlung auszuführen, um die Transportstromdatei, TS-Datei, in eine MP4-Datei umzuwandeln, und eine Umwandlungssteuerung auszuführen, je nachdem, ob der der Formatumwandlung zu unterziehende Videostrom ein HDR-Video oder ein SDR-Video ist; wobei
die Datenverarbeitungseinheit ferner dazu ausgelegt ist einen Prozess des Erfassens der Videoattributinformationen in Videostromeinheiten, die in der "Program Map Table", PMT, in PSI/SI-Daten innerhalb der Transportstromdatei, TS-Datei, gespeichert sind, und des Speicherns der erfassten Videoattributinformationen in einem Metadatenspeicherbereich der MP4-Datei basierend auf der Umwandlungssteuerung auszuführen.

2. Informationsverarbeitungsvorrichtung nach Anspruch 1, wobei
die Datenverarbeitungseinheit einen Prozess der Wiedergabe von Daten ausführt, die in der Transportstromdatei, TS-Datei, gespeichert sind, und die Videoattributinformationen in Videostromeinheiten erfasst, die in der Transportstromdatei, TS-Datei, gespeichert sind, bestimmt, ob es sich bei den wiederzugebenden Daten um HDR-Video oder SDR-Video handelt, und die Wiedergabe entsprechend einem Bestimmungsergebnis steuert.

3. Informationsverarbeitungsvorrichtung nach Anspruch 1, wobei
wenn der in der Transportstromdatei, TS-Datei, gespeicherte Videostrom ein HDR-Video ist,
die Videoattributinformationen Informationen enthalten, die eine Identifizierung ermöglichen, ob der HDR-Videostrom ein Basis-HDR-Videostrom oder ein HDR-Videostrom mit Erweiterungen ist.

4. Informationsverarbeitungsvorrichtung nach Anspruch 1, wobei
die Videoattributinformationen Informationen enthalten, die eine Identifizierung der Übertragungseigenschaften des in der Transportstromdatei, TS-Datei, gespeicherten Videostroms ermöglichen; oder
die Videoattributinformationen Informationen enthalten, die eine Identifizierung von Farbinformationen des in der Transportstromdatei, TS-Datei, gespeicherten Videostroms ermöglichen; oder
die Videoattributinformationen Informationen enthalten, die eine Identifizierung der YCbCr-Informationen des in der Transportstromdatei, TS-Datei gespeicherten Videostroms ermöglichen.

5. Informationsverarbeitungsverfahren, das in einer Informationsverarbeitungsvorrichtung ausgeführt wird, wobei das Informationsverarbeitungsverfahren durch eine Datenverarbeitungseinheit der Informationsverarbeitungsvorrichtung umfasst:
Erfassen einer Transportstromdatei, TS-Datei, die die zu verarbeitenden Daten speichert, und
Erfassen von Videoattributinformationen, die in einer "Program Map Table", PMT, in PSI/SI-Daten innerhalb der Transportstromdatei, TS-Datei, gespeichert sind, und Ausführen einer Formatumwandlung oder eines Ausgabeprozesses unter Anwendung der erfassten Videoattributinformationen, wobei
die Videoattributinformationen Videoattributinformationen in Videostromeinheiten sind,
die in der Transportstromdatei, TS-Datei, gespeichert sind, und verschiedene Attributinformationen enthalten,
die sich auf einzelne Videoströme beziehen, und Informationen umfassen, die eine Identifizierung ermöglichen, ob jeder Videostrom ein Video mit hohem Dynamikbereich, HDR, oder ein Video mit Standard-Dynamikbereich, SDR, ist, und
bei dem Ausführen des Prozesses die Datenverarbeitungseinheit eine Formatumwandlung ausführt, die die Transportstromdatei, TS-Datei, in eine MP4-Datei umwandelt, und eine Umwandlungssteuerung ausführt, je nachdem, ob der der Formatumwandlung zu unterziehende Videostrom ein HDR-Video oder ein SDR-Video ist; wobei
die Datenverarbeitungseinheit ferner einen Prozess des Erfassens der Videoattributinformationen in Videostromeinheiten, die in der "Program Map Table", PMT, in PSI/SI-Daten innerhalb der Transportstromdatei, TS-Datei, gespeichert sind, und das Speichern der erfassten Videoattributinformationen in einem Metadatenspeicherbereich der MP4-Datei basierend auf der Umwandlungssteuerung ausführt.

6. Programm, das eine Informationsverarbeitung in einer Informationsverarbeitungsvorrichtung veranlasst, ausgeführt zu werden, wobei das Programm eine Datenverarbeitungseinheit der Informationsverarbeitungsvorrichtung veranlasst, das Verfahren nach Anspruch 5 auszuführen.

## Revendications

1. Dispositif de traitement d'informations (600) comprenant :
une unité de traitement de données configurée pour :
acquérir un fichier de flux de transport, TS, stockant des données à traiter,
acquérir des informations d'attributs vidéo stockées dans une table de correspondance de programmes, PMT, dans des données PSI/SI à l'intérieur du fichier de flux de transport, TS, et
exécuter une conversion de format en appliquant les informations d'attributs vidéo acquises, où :
les informations d'attributs vidéo sont des informations d'attributs vidéo dans des unités de flux vidéo stockées dans le fichier de flux de transport, TS, et comprennent diverses informations d'attributs liées à des flux vidéo individuels et comprennent des informations permettant d'identifier si chaque flux vidéo est une vidéo à plage dynamique élevée, HDR, ou une vidéo à plage dynamique standard, SDR,
l'unité de traitement de données est configurée pour exécuter une conversion de format pour convertir le fichier de flux de transport, TS, en un fichier MP4, et pour exécuter une commande de conversion selon que le flux vidéo à soumettre à la conversion de format est une vidéo HDR ou une vidéo SDR ;
où l'unité de traitement de données est en outre configurée pour :
exécuter un processus d'acquisition des informations d'attributs vidéo dans des unités de flux vidéo stockées dans la table de correspondance de programmes, PMT, dans des données PSI/SI à l'intérieur du fichier de flux de transport, TS, et pour stocker les informations d'attributs vidéo acquises dans une zone de stockage de métadonnées du fichier MP4 sur la base de la commande de conversion.

2. Dispositif de traitement d'informations selon la revendication 1, dans lequel
l'unité de traitement de données exécute un processus de lecture de données stockées dans le fichier de flux de transport, TS, et
acquiert les informations d'attributs vidéo dans les unités de flux vidéo stockées dans le fichier de flux de transport, TS, détermine si les données à lire sont des vidéos HDR ou des vidéos SDR, et commande la lecture en fonction du résultat de la détermination.

3. Dispositif de traitement d'informations selon la revendication 1, dans lequel :
si le flux vidéo stocké dans le fichier de flux de transport, TS, est une vidéo HDR,
les informations d'attributs vidéo comprennent des informations permettant d'identifier si le flux vidéo HDR est un flux vidéo HDR de base ou un flux vidéo HDR d'amélioration.

4. Dispositif de traitement d'informations selon la revendication 1, dans lequel :
les informations d'attributs vidéo comprennent des informations permettant l'identification des caractéristiques de transfert du flux vidéo stocké dans le fichier de flux de transport, TS, ou
les informations d'attributs vidéo comprennent des informations permettant l'identification d'informations de couleur du flux vidéo stockées dans le fichier de flux de transport TS ; ou
les informations d'attributs vidéo comprennent des informations permettant l'identification d'informations YCbCr du flux vidéo stockées dans le fichier de flux de transport, TS.

5. Procédé de traitement d'informations exécuté dans un dispositif de traitement d'informations, le procédé de traitement d'informations comprenant les étapes suivantes exécutées par une unité de traitement de données du dispositif de traitement d'informations :
acquérir un fichier de flux de transport, TS, stockant des données à traiter ; et
acquérir des informations d'attributs vidéo stockées dans une table de correspondance de programmes, PMT, dans des données PSI/SI à l'intérieur du fichier de flux de transport, TS, et exécuter une conversion de format ou un processus de sortie en appliquant les informations d'attributs vidéo acquises, où :
les informations d'attributs vidéo sont des informations d'attributs vidéo dans des unités de flux vidéo stockées dans le fichier de flux de transport, TS, et comprennent diverses informations d'attributs liées à des flux vidéo individuels et comprennent des informations permettant d'identifier si chaque flux vidéo est une vidéo à plage dynamique élevée, HDR, ou une vidéo à plage dynamique standard, SDR, et
dans l'exécution du processus, l'unité de traitement de données exécute une conversion de format convertissant le fichier de flux de transport, TS, en un fichier MP4, et exécute une commande de conversion selon que le flux vidéo à soumettre à la conversion de format est une vidéo HDR ou une vidéo SDR ;
où l'unité de traitement de données exécute en outre un processus d'acquisition des informations d'attributs vidéo dans des unités de flux vidéo stockées dans la table de correspondance de programmes, PMT, dans des données PSI/SI à l'intérieur du fichier de flux de transport, TS, et de stockage des informations d'attributs vidéo acquises dans une zone de stockage de métadonnées du fichier MP4 sur la base de la commande de conversion.

6. Programme provoquant l'exécution d'un traitement d'informations dans un dispositif de traitement d'informations, le programme provoquant l'exécution du procédé de la revendication 5 par une unité de traitement de données du dispositif de traitement d'informations.
